# EUROPEAN PATENT SPECIFICATION

(11) **EP 1 526 442 B1**
(45) Date of publication and mention of the grant of the patent: **11.07.2018**
(21) Application number: 04255847.8
(22) Date of filing: 24.09.2004
(51) Int. Cl.: H04N 1/00, H04N 5/44, G06F 3/12, H04N 21/43

(54) **Printer driver user interface for multimedia data**
Benutzerschnittstelle eines Druckertreibers zur Verwendung bei Multimedia Daten
Interface utilisateur d'un pilote d'imprimante pour données multimédia

(30) Priority: 25.09.2003 US 506206 P; 25.09.2003 US 506303 P; 04.11.2003 US 701966; 03.03.2004 US 795031; 30.03.2004 US 814944
(43) Date of publication of application: 27.04.2005
(73) Proprietor: Ricoh Company, Ltd., Tokyo 143-8555 (JP)
(72) Inventor: Hart, Peter E., c/o Ricoh Innovations, Inc., Cupertino CA 95014, California (US); Hill, Jonathan J.. c/o Ricoh Innovations, Inc., Cupertino CA 95014, California (US); Graham, Jamey. c/o Ricoh Innovations, Inc., Cupertino CA 95014, California (US); Piersol, Kurt W., c/o Ricoh Innovations, Inc., Cupertino CA 95014, California (US)
(74) Representative: Mounteney, Simon James

(56) References cited:
- EP-A2- 0 651 556
- EP-A2- 0 743 613
- EP-A2- 1 133 170
- WO-A1-98/06098
- WO-A2-00/73875
- US-A1- 2001 020 954
- US-A1- 2002 019 982
- US-A1- 2002 171 857
- US-A1- 2003 084 462

## Description

### BACKGROUND OF THE INVENTION

### 1. Field of the Invention

The present invention relates to systems and methods for providing a multimedia printing interface. In particular, the present invention relates to systems and methods for providing a print driver dialog interface that allows users to format multimedia data to generate a representation of multimedia data.

### 2. Description of the Background Art

Printers in modern systems today are not designed to generate multimedia documents. Currently, there is not any effective method for generating an easily readable representation of multimedia content in either paper or digital format. Several different techniques and tools are available for accessing and navigating multimedia information (e.g., existing multimedia players). However, none of these provide the user with the option of creating a multimedia document that the user can easily review and through which a user can gain access to multimedia content.

Printers in modern systems today are also not designed to facilitate interaction with multimedia content or with print content, in general. Standard printer dialog boxes provide users with some general formatting options in a print job, such as number of pages to print, number of copies to be made, and the like. However, printer drivers in modern operating systems are not designed to facilitate interactive information gathering. Since the print job can be redirected to another printer, or the printing protocol does not allow such interactive sessions, the operating system does not encourage interaction with the user.

Due to these limitations in printer interaction, the user cannot define more detailed printing preferences in standard printing. Additionally, the user cannot define any printing preferences at all regarding multimedia content, since such printing capabilities are not currently available. Thus, a user cannot use current print dialog boxes to select segments of multimedia content that are of interest for printing. Current print dialog boxes also do not permit a user to preview any multimedia content. Additionally, there is not any way for a user to search through a lengthy multimedia segment for particular features of interest. For example, a user cannot currently search through a news segment for content covering a particular topic, nor can a user search for specific faces or events in a news segment. Moreover, there is no way to define a printing format for selected segments of multimedia content, and there is no way to preview or modify printing formats directly through a print dialog box. US2001/0020954 discloses techniques for capturing information during multimedia presentations. The audio and video information received by the presentation recording device is processed and stored in a format which facilitates subsequent retrieval. The user may print information related to the presentation. Therefore, what is needed is a system and methods for permitting user interaction with and control over generation of a multimedia representation that overcomes the limitations found in the prior art.

### SUMMARY OF THE INVENTION

The present invention overcomes the deficiencies and limitations of the prior art with a system and method providing a user interface that permits users to interact with media content analysis processes and media representation generation processes.

In a first aspect, the present invention provides a system as set out in claim 1.

In a second aspect, the present invention provides a method as set out in claim 11.

### BRIEF DESCRIPTION OF THE DRAWINGS

The invention is illustrated by way of example, and not by way of limitation in the figures of the accompanying drawings in which like reference numerals refer to similar elements.
**Figure 1** is a block diagram of a system for providing a print driver dialog interface that allows users to format multimedia data before generating a representation of the multimedia data.
**Figure 2** is a block diagram of an exemplary architecture for one embodiment of the system of Figure 1.
**Figure 3** is an exemplary representation of interactive communication with the printer.
**Figure 4** is a graphical representation of an exemplary multimedia rendering application with a print selection button inserted into the application.
**Figure 5** is a flowchart of a method for system control by the user before any multimedia transformation was performed.
**Figure 6** is a flowchart of a method for system control when the system is configured to transfer the multimedia data, perform the default transformation, and display the results in a graphical user interface.
**Figure 7** is a graphical representation of an exemplary graphical user interface showing generation of a representation including user-selected ranges of an audio file.
**Figure 8** is a graphical representation of an exemplary graphical user interface providing options for formatting a multimedia representation.
**Figure 9** is a graphical representation of an exemplary graphical user interface showing generation of a two-page summary of an audio file.
**Figure 10** is a graphical representation of an exemplary graphical user interface showing division of an audio file timeline into two parts.
**Figure 11** is a graphical representation of an exemplary graphical user interface showing division of an audio file timeline into two vertical parts.
**Figure 12** is a graphical representation of an exemplary graphical user interface showing generation of a representation including user-selected ranges of an video file.
**Figure 13** is a graphical representation of an exemplary graphical user interface showing a preview field for previewing multimedia content.
**Figure 14** is a graphical representation of an exemplary graphical user interface showing use of segment marker buttons in a preview field.
**Figure 15** is a graphical representation of an exemplary graphical user interface showing a dialog box providing options to the user.
**Figure 16** is a graphical representation of an exemplary graphical user interface showing a dialog box for editing a video segment.
**Figure 17** is a graphical representation of an exemplary graphical user interface showing generation of a video representation in which face detection techniques have been applied.
**Figure 18** is a graphical representation of an exemplary graphical user interface showing generation of a video representation from multiple sources.
**Figure 19** is a graphical representation of an exemplary graphical user interface showing generation of a video representation in which a user-defined combination of analysis techniques have been applied.
**Figure 20** is a graphical representation of an exemplary multimedia representation including video frames and text.

### DETAILED DESCRIPTION OF THE PREFERRED EMBODIMENTS

A system and method for providing a graphical user interface or print driver dialog interface that allows users to interact with a process of multimedia representation generation is described. According to an embodiment of the present invention, a graphical user interface is provided that displays multimedia information that may be stored in a multimedia document. According to the teachings of the present invention, the interface enables a user to navigate through multimedia information stored in a multimedia document.

For the purposes of this invention, the terms "media," "multimedia," "multimedia content," "multimedia data," or "multimedia information" refer to any one of or a combination of text information, graphics information, animation information, sound (audio) information, video information, slides information, whiteboard images information, and other types of information. For example, a video recording of a television broadcast may comprise video information and audio information. In certain instances the video recording may also comprise close-captioned (CC) text information, which comprises material related to the video information, and in many cases, is an exact representation of the speech contained in the audio portions of the video recording. Multimedia information is also used to refer to information comprising one or more objects wherein the objects include information of different types. For example, multimedia objects included in multimedia information may comprise text information, graphics information, animation information, sound (audio) information, video information, slides information, whiteboard images information, and other types of information.

For the purposes of this invention, the terms "print" or "printing," when referring to printing onto some type of medium, are intended to include printing, writing, drawing, imprinting, embossing, generating in digital format, and other types of generation of a data representation. Also for purposes of this invention, the output generated by the system will be referred to as a "media representation," a "multimedia document," a "multimedia representation," a "document," a "paper document," or either "video paper" or "audio paper." While the words "document" and "paper" are referred to in these terms, output of the system in the present invention is not limited to such a physical medium, like a paper medium. Instead, the above terms can refer to any output that is fixed in a tangible medium. In some embodiments, the output of the system of the present invention can be a representation of multimedia content printed on a physical paper document. In paper format, the multimedia document takes advantage of the high resolution and portability of paper and provides a readable representation of the multimedia information. According to the teachings of the present invention, a multimedia document may also be used to select, retrieve, and access the multimedia information. In other embodiments, the output of the system can exist in digital format or some other tangible medium. In addition, the output of the present invention can refer to any storage unit (e.g., a file) that stores multimedia information in digital format. Various different formats may be used to store the multimedia information. These formats include various MPEG formats (e.g., MPEG 1, MPEG 2, MPEG 4, MPEG 7, etc.), MP3 format, SMIL format, HTML+TIME format, WMF (Windows Media Format), RM (Real Media) format, Quicktime format, Shockwave format, various streaming media formats, formats being developed by the engineering community, proprietary and customary formats, and others.

In the following description, for purposes of explanation, numerous specific details are set forth in order to provide a thorough understanding of the invention. It will be apparent, however, to one skilled in the art that the invention can be practiced without these specific details. In other instances, structures and devices are shown in block diagram form in order to avoid obscuring the invention. For example, certain features of the present invention are described primarily with reference to video content. However, the features of the present invention apply to any type of media content, including audio content, even if the description discusses the features only in reference to video information.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

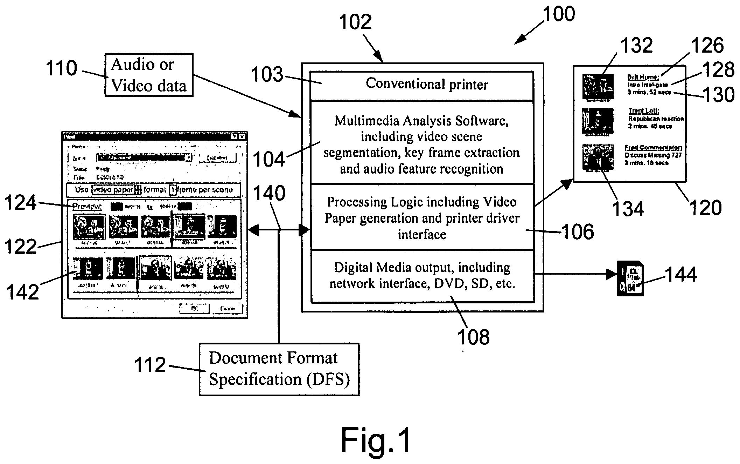

Referring now to Figure 1, an exemplary system 100 for providing a graphical user interface that allows users to format multimedia data for generating a multimedia representation is shown. In this embodiment, there is shown an augmented output device or a printer 102 for generating multimedia representations. The printer 102 displays multimedia data, such as audio or video data, which the user can manage and edit through the user interface or print driver dialog interface (PDDI) 122. While the term "print driver dialog interface" or "PDDI" will be used to refer to the graphical user interface, the graphical user interface is not limited to printers and may be any graphical user interface that provides the functionality described below. The multimedia information that is displayed in the PDDI 122 may be stored in a multimedia document that is accessible to system 100. The multimedia information may be stored directly on system 100, or it may be information stored on an external storage device or a server (not shown) from which multimedia information may be accessed by system 100 via connection 140.

In other embodiments, instead of accessing a multimedia document, the system 100 may receive a stream of multimedia information (e.g., a streaming media signal, a cable signal, etc.) from a multimedia information source. According to an embodiment of the present invention, system 100 stores the multimedia information signals in a multimedia document and then generates the interface 122 that displays the multimedia information. Examples of sources that can provide multimedia information to system 100 include a television, a television broadcast receiver, a cable receiver, a video recorder, a digital video recorder, a personal digital assistant (PDA), or the like. For example, the source of multimedia information may be embodied as a television that is configured to receive multimedia broadcast signals and to transmit the signals to system 100. In this example, the information source may be a television receiver/antenna providing live television feed information to system 100. The information source may also be a device such as a video recorder/player, a DVD player, a CD player, etc. providing recorded video and/or audio stream to system 100. In alternative embodiments, the source of information may be a presentation or meeting recorder device that is capable of providing a stream of the captured presentation or meeting information to system 100. Additionally, the source of multimedia information may be a receiver (e.g., a satellite dish or a cable receiver) that is configured to capture or receive (e.g., via a wireless link) multimedia information from an external source and then provide the captured multimedia information to system 100 for further processing. Multimedia content can originate from a proprietary or customized multimedia player, such as RealPlayer™, Microsoft Windows Media Player, and the like.

In alternative embodiments, system 100 may be configured to intercept multimedia information signals received by a multimedia information source. System 100 may receive the multimedia information directly from a multimedia information source or may alternatively receive the information via a communication network.

The augmented output device or printer 102 comprises a number of components that including a conventional printer 103, a media analysis software module 104, processing logic 106, and digital media output 108. The conventional printer 103 component of the printer 102 can include all or some of the capabilities of a standard or conventional printing device, such as an inkjet printer, a laser printer, or other printing device. Thus, conventional printer 103 has the functionality to print paper documents, and may also have the capabilities of a fax machine, a copy machine, and other devices for generating physical documents. More information about printing systems is provided in the U.S. Patent Application entitled "Networked Printing System Having Embedded Functionality for Printing Time-Based Media," to Hart, et al., filed March 30, 2004, Attorney Docket Number 20412-8341, in which a networked printing system enables the printing of time-based media by sharing processing resources on a printer and on an attached network device, such as a computer system. Based on received time-based media data, the printing system produces a paper or other printed output as well as a related electronic output. Together, the printed and electronic outputs provide a representation of the time-based media. Depending on the desired application for the printer, the printer may include any combination of mechanisms for receiving media data, printing the printed output, and producing the electronic output.

The media analysis software module 104 includes audio and video content recognition and processing software. The media analysis software module 104 can be located on the printer 102 or can be located remotely, such as on a personal computer (PC). Some examples of such multimedia analysis software include, but are not limited to, video event detection, video foreground/background segmentation, face detection, face image matching, face recognition, face cataloging, video text localization, video optical character recognition (OCR), language translation, frame classification, clip classification, image stitching, audio reformatter, speech recognition, audio event detection, audio waveform matching, audio-caption alignment, video OCR and caption alignment. Once a user selects "print" within system 100, the system 100 can analyze multimedia content using one or more of these techniques, and can provide the user with analysis results from which the user can generate a document.

In the embodiment shown in Figure 1, the printer 102 additionally comprises processing logic 106 that controls the PDDI 122 and manages the printer's 102 generation of a multimedia document 120 or media representation. For example, the processing logic 106 manages the display of the PDDI 122 that allows the user control certain printer actions, such as the processing of the multimedia content or the format in which the multimedia content will be displayed in a multimedia representation. Alternatively, the functionality of the PDDI 122 can be provided by a web interface, allowing the user to manage printer actions, such as formatting issues, through this web interface.

In the example shown in Figure 1, the PDDI 122 displays a user's selections which include the printing of a multimedia document 120 that displays video content. In this example, the user has selected to have the multimedia content printed in video paper format, and the video paper will display one frame per scene. Additionally, the interface 122 includes a preview field 124 that displays a preview of the multimedia representation that the user is creating. In the Figure 1 example, the PDDI 122 shows thumbnail pictures 142 of the video frames.

Additionally, the PDDI 122 can allow the user to set formatting preferences with regard to the multimedia document 120 produced. In some embodiments, the user can set preferences as to document format and layout, font type and size, information displayed in each line, information displayed in a header, size and location of schedule columns, font colors, line spacing, number of words per line, bolding and capitalization techniques, language in which the document is printed, paper size, paper type, and the like. For example, the user might choose to have a multimedia document that includes a header in large, bold font showing the name of the multimedia content being displayed (e.g., CNN News segment), and the user can choose the arrangement of video frames to be displayed per page.

As shown in the embodiment of Figure 1, a data structure called a Document Format Specification (DFS) 112 is generated by print driver software. The DFS 112 represents the transformation(s) of the multimedia data. The DFS 112 is used to populate the PDDI 122 and is modified by the system 100. The DFS 112 determines the feature extraction options presented to the user, which can be applied to the multimedia data. The DFS 112 also determines the format guidelines used to produce the output document. The DFS 112 can be supplied by an external application, such as a print driver on a PC, or it can be determined internally, within the printer 102.

The DFS 112 can include meta data information about a multimedia file, such as information about the title of the multimedia content, the producer/publisher of the multimedia content, and the like. The DFS 112 can also include other information, such as beginning and ending times of a multimedia segment (e.g., beginning and ending times of an audio recording), and a specification for a graphical representation of the multimedia data that can be displayed along a time line (e.g., a waveform showing the amplitude of an audio signal over time). The DFS 112 can further include a specification for time stamp markers and meta-data for each time stamp (e.g., textual tags or bar codes) that could be displayed along the timeline, and layout parameters that determine the appearance of the physical multimedia document 120. More information about the DFS 112 and examples are provided in the U.S. Utility Application entitled "Printable Representations for Time-Based Media ," to Hull, et. al., filed on March 30, 2004, Attorney Docket Number 20412-8497, in which the system allows a user to generate a representation of time-based media. The system includes a feature extraction module for extracting features from media content. For example, the feature extraction module can detect solos in a musical performance, or can detect music, applause speech, and the like. A formatting module formats a media representation generated by the system. The formatting module also applies feature extraction information to the representation, and formats the representation according to a representation specification. In addition, the system can include an augmented output device that generates a media representation based on the feature extraction information and the representation specification. The representation can be generated in a paper-based format, in digital format, or in any other representation formats. The representation generated can include user-selectable identifiers that enable random access to points along a media content timeline. The methods of the present invention include extracting features from media content, and formatting a media representation being generated using the extracted features and based on a specification or data structure specifying the representation format. The methods can also include generating a media representation based on the results of the formatting.

The multimedia document 120 generated by the printer 102 can comprise various formats. For example, the multimedia document 120 can comprise a paper document, such as video paper of the form shown in Figure 1. The multimedia document 120 produced by the printer 102 can be also stored on digital media 144. As shown in Figure 1, this embodiment of the printer 102 includes digital media output device or interface 108. The digital media writing hardware can include, for example, a network interface card, a digital video disc (DVD) writer, a secure digital (SD) writer, a compact disc (CD) writer, and the like. The multimedia content can be stored on digital media 144, such as flash media, a DVD, a CD, and the like.

The multimedia document 120 can have a number of different types of layouts and can display various types of information. Figure 1 provides an example of a video paper document displaying video frames from one or more news segments. In the Figure 1 example, the video paper document includes thumbnail images or frames 132 extracted from video information and displaying video content that the user can preview. In this embodiment, the user can designate formatting preferences for the video paper document through the PDDI 122. The layout and format information may specify the sampling rate for extracting the multimedia frames 132, the number of frames 132 that are to be extracted from the video information, the order and placement of the frames 132 on the medium, and other like information. For video information, the printer 102 can extract frames 132 that capture salient features of the video (or frames that are informative) for a particular segment of the multimedia information. Additionally, as discussed previously, the printer 102 may include feature recognition capabilities (e.g., face recognition, face detection, OCR, and the like), allowing the user to search within a video segment for items of interest, such as particular face images, particular words displayed as text, and the like. For example, the printer 102 can use face recognition techniques to extract frames displaying images of the faces of particular persons for which the user has an interest in viewing.

In another embodiment of the present invention, user-selectable identifiers 134 (e.g., a barcode) are associated with each frame 132. In the Figure 1 example, the user selectable identifiers 134 are displayed under each frame 132, but these can alternatively be displayed anywhere on the page. The user-selectable identifiers 134 act as an interface to permit users to access or retrieve the multimedia content displayed on the multimedia document 120. A user selects the user-selectable identifier 134 by scanning the appropriate barcode on the printed paper document using any type of device that has a barcode scanner incorporated into it, such as a cell phone or a PDA. For example, by scanning the barcode of Figure 1, the user can cause the video clip to be displayed on a display device (e.g., a television, a PC monitor, a cell phone screen, a PDA, and the like) and the user can view the content. As another example, the paper multimedia document 120 can also or alternatively include numerical identifiers included near each frame 132, and the user can type these numerals into a keypad or touchpad associated with a device to direct the system 100 to display a video clip on the display device. Alternatively, if the video paper document shown in Figure 1 were in digital format, the system 100 could be configured so that a user could select the frame 132 (i.e., by clicking on the frame with a mouse or other selection device) causing the video content to be displayed on a display device.

The printer 102 is capable of retrieving multimedia information corresponding to the user-selectable identifiers 134. The signal communicated to the printer 102 from the selection device (i.e., device with barcode scanner or keypad for entering in numerical identifiers) may identify the multimedia content frame 132 selected by the user, the location of the multimedia content to be displayed, the multimedia paper documents from which the segments are to be selected, information related to preferences and/or one or more multimedia display devices (e.g., a television set) selected by the user, and other like information to facilitate retrieval of the requested multimedia information. For example, the system 100 can access a video file stored on a PC, and the system can play this video content on the user's command.

The example of Figure 1 further shows text information next to each frame 132 in the multimedia document 120. The text information includes the speaker name field 126 or a field displaying the name (e.g., Brit Hume) of the person shown in the frame 132 of the video. The text information further includes the subject field 128 that displays information about the video segment subject (e.g., Intro Intel-gate). Additionally, the text information includes the time field 130, which displays the length of time of the video segment (e.g., 3 mins, 52 secs.).

The user might also choose to have included in the multimedia document 120 some of the audio information for a frame 132, which is displayed as text. For example, the user may choose to have a portion of the transcript of a multimedia segment (i.e., a transcript of a news program segment) displayed next to the multimedia frame 132. As another example, the user might opt to include in the printed document a text description or summary of the content of each frame 132, such as a brief summary of a particular television segment or program. The user can use the print driver dialog interface 122 to identify techniques to be used for converting the audio information to text information (i.e., techniques for generating a text transcript for the audio information), the format and styles for printing the audio transcript (which may be the same as for printing text information), formats and styles for printing summary text about multimedia content, and the like. Additionally, information about retrieving multimedia information and annotating multimedia information is provided in the Video Paper Applications, referenced previously.

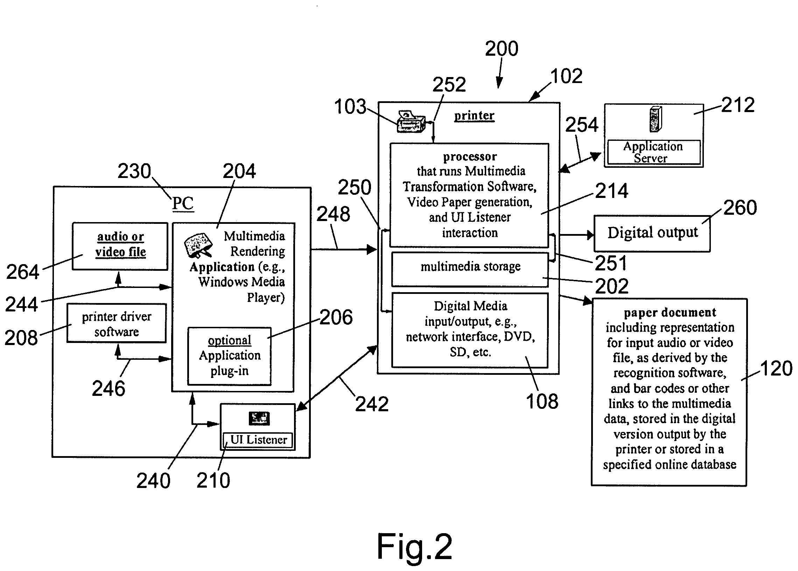

Referring now to Figure 2, there is shown the architecture of an embodiment of the present invention. In this embodiment, the system 200 includes a printer 102 that is coupled to a data processing system, which is a PC 230 in the embodiment of Figure 2, but could also be a portable computer, a workstation, a computer terminal, a network computer, a mainframe, a kiosk, a standard remote control, a PDA, a game controller, a communication device such as a cell phone, or any other data system. The printer 102 can also optionally be coupled to an application server 212 in a network environment.

In the example of Figure 2, the printer 102 comprises the following components: a conventional printer 103, a processor 214, a multimedia storage 202, and the digital media input/output 108. The conventional printer 103 includes the standard printing capabilities that a conventional printer generally has, as discussed previously.

The processor 214 processes data signals and may comprise various computing architectures including a complex instruction set computer (CISC) architecture, a reduced instruction set computer (RISC) architecture, or an architecture implementing a combination of instruction sets. Although only a single processor is shown in Figure 2, multiple processors may be included. Main memory (not shown) may store instructions and/or data that may be executed by processor 214, including the software and other components of system 200. The instructions and/or data may comprise code for performing any and/or all of the techniques described herein. Main memory (not shown) may be a dynamic random access memory (DRAM) device, a static random access memory (SRAM) device, or some other memory device known in the art.

As described previously, the printer 102 accesses or receives multimedia information, such as an audio or video file, from some source. In one embodiment, the multimedia file is stored on a data processing system, such as PC 230, which is coupled to the printer 102 by signal line 248. In the embodiment of Figure 2, the multimedia file can be stored in the multimedia file storage 264 on PC 230. The multimedia file may also be accessible from some remote source (not shown). As another example, the multimedia file might be stored on the printer 102, itself, in the printer multimedia storage 202, and the file is accessed from this storage 202.

A user can view multimedia content on a display device (not shown) to select particular content for printing with printer 102, as described above. The display device (not shown) can include a cathode ray tube (CRT), a flat-panel device such as a liquid crystal display (LCD), a projection device, and the like. In other embodiments, the printer 102 includes an LCD display panel or other type of display panel, and the user can display multimedia content on the printer, itself.

In the Figure 2 embodiment, the user views a multimedia file using a multimedia rendering application (MRA) 204 on PC 230 that allows the user to play back, store, index, edit, or manipulate multimedia information. Examples of MRAs 204 include proprietary or customized multimedia players (e.g., RealPlayer™ provided by RealNetworks, Microsoft Windows Media Player provided by Microsoft Corporation, QuickTime™ Player provided by Apple Corporation, Shockwave multimedia player, and others), video players, televisions, PDAs, or the like. In the embodiment of Figure 2, MRA 204 is coupled to multimedia file storage 264 by bus 244. Stored multimedia content can be accessed by MRA 204 and transferred to MRA 204 to be viewed by the user. More information about multimedia visualization is provided in the following U.S. Patent Applications: U.S. Patent Application number 10/081,129, to Graham, entitled "Multimedia Visualization and Integration Environment," filed on Feb. 21, 2001; U.S. Patent Application number 10/701,966, to Graham, entitled "Multimedia Visualization and Integration Environment," filed on November 4, 2003; U.S. Patent Application number 10/465,027, to Graham, et. al., entitled "Interface For Printing Multimedia Information," filed on June 18, 2003; U.S. Patent Application entitled "Techniques For Displaying Information Stored In Multiple Multimedia Documents," to Graham, et. al., filed on June 18, 2003; U.S. Patent Application number 10/174,522, to Graham, entitled "Television-Based Visualization and Navigation Interface, filed on June 17, 2002; and U.S. Patent Application, to Graham, entitled "Multimedia Visualization and Integration Environment," filed March 3, 2004.

In the embodiment of Figure 2, the system 200 also includes an output device driver module or a printer driver software module 208, which can be located on PC 230 or another location. The printer driver software module 208 is configured at installation time to perform certain functions. The printer driver software 208 adds a "print" function to an existing MRA 204, such as Windows Media Player. An optional application plug-in 206 may be required for adding the "print" function. As an alternative, a user can install a separate MRA 204 designed for this purpose. When the printer 102 is invoked (i.e., the user selections a print button on a MRA 204), the printer driver software module 208 receives a print request from the MRA 204, along with multimedia data and other relevant information through signal line 246. The printer driver software module 208 transfers multimedia data to the printer 102 through bus 248 and instructs the printer to apply specified transformation routines (e.g., face recognition). The printer driver software module 208 can additionally prompt the user as necessary to confirm results and layout decisions that the user has made.

When printer 102 receives a print request, the request and the associated multimedia data are transferred to processor 214. The processor 214 interprets the input and activates the appropriate module. The processor 214 is coupled to and controls the multimedia transformation software module (MTS) (not shown) for transforming multimedia content. If the processor 214 has received a print request, the processor 214 may then activate the MTS (not shown) depending on whether or not the user has requested transformation of the multimedia data. The transformations to the multimedia content can be applied on the printer 102, on a PC 230 (i.e., by software installed with the print driver 208), or at some other location. The MTS (not shown) applies specified transformation functions to a given audio or video file. The MTS (not shown) generates the appropriate document-based representation and interacts with the user through the print driver dialog interface to modify the parameters of the transformation and to preview the results. The results and parameters of the multimedia transformation are represented in the Document Format Specification (DFS) that was described previously.

As described above, printer 102 can include multimedia storage 202, for storing multimedia data, such as video or audio files. The processor 214 is coupled to multimedia storage 202 and can transfer multimedia data, through bus 251, to the multimedia storage 202. This data can be stored while a print job is progressing. Storage 202 may include a number of memory types including a main random access memory (RAM) for storage of instructions and data during program execution and a read only memory (ROM) in which fixed instructions are stored. Storage 202 may also include persistent (non-volatile) storage for program and data files, such as a hard disk drive, a floppy disk drive, a CD-ROM device, a DVD-ROM device, a DVD-RAM device, a DVD-RW device, or other like storage device known in the art. One or more of the drives or devices may be located at remote locations on other connected computers.

The processor 214 also controls a digital media input/output 108. the processor 214 transfers information to and receives information from digital media input/output 108, through bus 250. Multimedia documents created can be converted into some type of digital format, as described previously. The digital media writing hardware can include, for example, a network interface card, a digital video disc (DVD) writer, a secure digital (SD) writer, a compact disc (CD) writer, and the like. The digital output 260 documents can be stored on digital media, including a CD, a DVD, flash media, and the like. Thus, the user can create a digital output 260 version of input audio or video file, and this can be viewed on a specified target device, such as a PC, a cell phone, or a PDA.

The processor 214 also manages generation of a multimedia document 120, such as a video or audio paper document. Multimedia information can also be displayed in a paper document or multimedia document 120, as shown in Figure 2. The processor 214 communicates with and sends print job information to a conventional printer 103, through bus 252, and the conventional printer 103 generates a paper output. The multimedia document 120 generated includes a paper representation of input audio or video file information, as derived by recognition software. The Figure 2 embodiment of the multimedia document 120 can also include user-selectable identifiers, such as barcodes, and other links to multimedia data stored by the printer 102 or stored in a specified online database.

The processor 214 also controls external communication hardware, such as through a network interface. The processor 214 can transmit information to and receive information from an application server 212 through bus 254. The printer 102 can also communicate with and obtain information from an application server 212 (e.g., "Web services" or "grid computing" systems).

In one embodiment, the system 200 includes a communication monitoring module or a user interface listener module 210 (UI Listener). In the embodiment of Figure 2, the UI Listener 210 is located on the PC 230, but the UI Listener can be alternatively located on the printer 102, on an application server 212, or at some other remote location. The UI Listener 210 is coupled to and communicates with MRA 204, and can send and receive data over bus 240. Specifically, the UI Listener 210 receives print requests from the user to the MRA and sends requests to the user from remote components (e.g., the printer 102, an application server 212, etc.). The UI Listener 210 is also coupled to and communicates with printer 102, and can send and receive data over bus 242. Specifically, the UI Listener 210, sends print requests to the printer and receives requests from the printer 102 for further information from the user. Additionally, UI Listener 210 can be coupled to and communicate with an application server 212 over a network, and can send and receive data over network connection (not shown). The UI Listener 210 receives information from application server 212, such as requests for information from the user, and the UI Listener 210 can return a response. The UI Listener 210 and its functionality is discussed in more detail below.

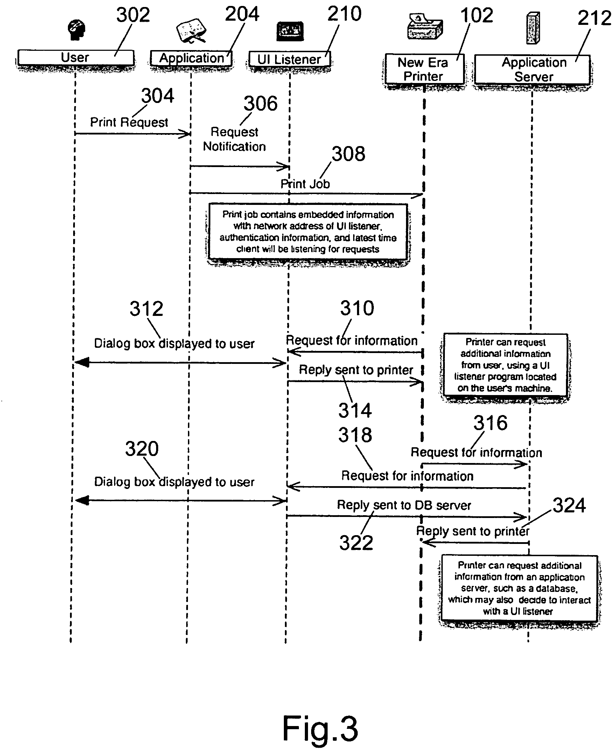

Referring now to Figure 3, there is shown a graphical representation of interactive communication with the printer 102, within the system 200. Printer drivers typically do not facilitate interactive information gathering. Once initial printer settings are captured, further interactions with the printer 102 are generally not allowed. One approach to this problem is to embed metadata into the print stream itself. However, the printer 102 could need to ask the user 302 for more information, in response to computations made from the data supplied by the user. In addition, the printer 102 might, itself, delegate some tasks to other application servers 212, which might in turn need more information from the user 302.

In order to allow this interaction without modifying printer driver architecture of the underlying operating system, an extra mechanism, such as the one shown in Figure 3, can be constructed. One solution is to construct a UI Listener 210, a program, which listens to a network socket, accepts requests for information, interacts with a user 302 to obtain such data, and then sends the data back to the requester. Such a program might have a fixed set of possible interactions, or accept a flexible command syntax, which would allow the requester to display many different requests. An example of such a command syntax would be the standard web browser's ability to display HTML forms. These forms are generated by a remote server and displayed by the browser, which then returns results to the server. In this embodiment, the UI listener 210 is different from a browser, though, in that a user 302 does not generate the initial request to see a form. Instead, the remote machine generates this request. Thus, in this embodiment, the UI listener 302 is a server, not a client.

Because network transactions of this type are prone to many complex error conditions, a system of timeouts allows efficient operation. Each message sent across a network generally either expects a reply or is a one-way message. Messages that expect replies can have a timeout, or a limited period of time during which it is acceptable for the reply to arrive. In this invention, embedded metadata would include metadata about a UI listener 210 that will accept requests for further information. Such metadata consists of at least a network address, port number, and a timeout period. It might also include authentication information, designed to prevent malicious attempts to elicit information from the user 302, since the user 302 cannot tell whether the request is coming from a printer 102, a delegated server 212, or a malicious agent. If the printer 102 or a delegated application server 212 wishes more information, it can use the above noted information to request that the UI Listener 210 ask a user 302 for the needed information. The UI Listener 210 program can be located on a user's 302 interaction device (e.g., a PC, a cell phone, or a PDA), on the printer 102 (i.e., for user interaction on a LCD panel located on the printer), or another remote location.

Figure 3 shows an example of the interactive communication system described above. In the Figure 3 example, the user 302 selects a "print" option within system 200, which can be involved by clicking on a print button that was added to an MRA 204 or other methods of selecting a "print" option. By selecting "print," the user 302 sends a print request 304 to the MRA 204 or other application. For example, the user 302 could request to print a video paper representation of user-selected video frames from a news segment on CNN. The MRA 204 sends a request notification 306 message to the UI Listener 210, requesting that the UI Listener 210 notify the printer 102 of the print request 304. The print job 308 information, such as the user-defined layout and formatting preferences for the video paper, is then sent from the MRA 204 to the printer 102. The print job 308 can contain embedded information, such as the network address of the UI Listener 210, authentication information, and information about the latest time the client will be listening for requests.

In the example of Figure 3, the printer 102 sends a request for information 310 to the UI Listener 210 program located on the user's 302 interaction device. For example, the printer 102 could request further information about a particular layout preference selected by the user for a video paper print job or could newly confrm that a default layout should be used. The UI Listener 210 then delivers this request to the user 302, and a dialog box is displayed 312 to the user 302 allowing the user 302 to respond to the request by selecting information within the dialog box. The user's 302 reply 314 is sent to the printer 102, in answer to the printer's 102 request for information 310.

Additionally, in the example of Figure 3, the printer 102 sends a request for information 316 to the application server 212. For example, the printer 102 could request specific data necessary to the print operation from a database, and the database may need to gather more information from the user. In the Figure 3 example, the application server 212 sends a request for information 318 to the UI Listener 210, which then forwards the request 318 to the user 302. A dialog box is displayed 320 to the user 302, allowing the user 302 to respond to the request 318. The UI Listener 210 then forwards the user's 302 reply 322 to the application server 212, and the application server 212 can then send a reply 324 to the printer 102, regarding the printer's 102 request 316 for information.

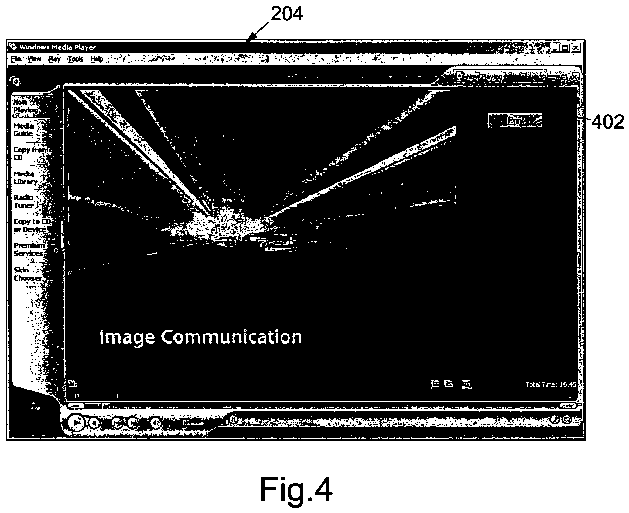

Referring now to Figure 4, there is shown a graphical representation of an MRA 204 with a "Print" button 402 added into the MRA 204. In this example, the MRA 204 box is a Windows Media Player (WMP) application, but it is possible to use other types of MRAs 204, as discussed previously. A user can select a print option by clicking on the Print button 402, causing the printer to generate a multimedia document. A print option can be added to the WMP, version 9 by utilizing the plug-in feature provided by Microsoft. The plug-in feature allows developers to create an application that supplements the WMP in some way. Several types of plug-ins can be created: "display," "settings," "metadata," "window and background," and the like. Microsoft provides an explanation of what a plug-in is and how to build a plug-in. Using one of the user interface plug-in styles, it is possible to add a button or panel to the WMP screen. More information about adding a print option to an application is provided in the U.S. Patent Application entitled "Printing System with Embedded Audio/Video Content Recognition and Processing," to Hull et. al., filed on March 30, 2004, Attorney Docket Number 20412-8394, in which a printing system includes embedded functionality for performing media content recognition and processing. Based on the results of the content recognition and processing performed on the media content, the printing system can generate a paper-based or other printed representation thereof. The printing system may further produce a corresponding electronic representation of the media content, which in combination with the printed representation can be used to view and access the media content. A printing system may also include a media renderer application having a print functionality for printing selected media content.

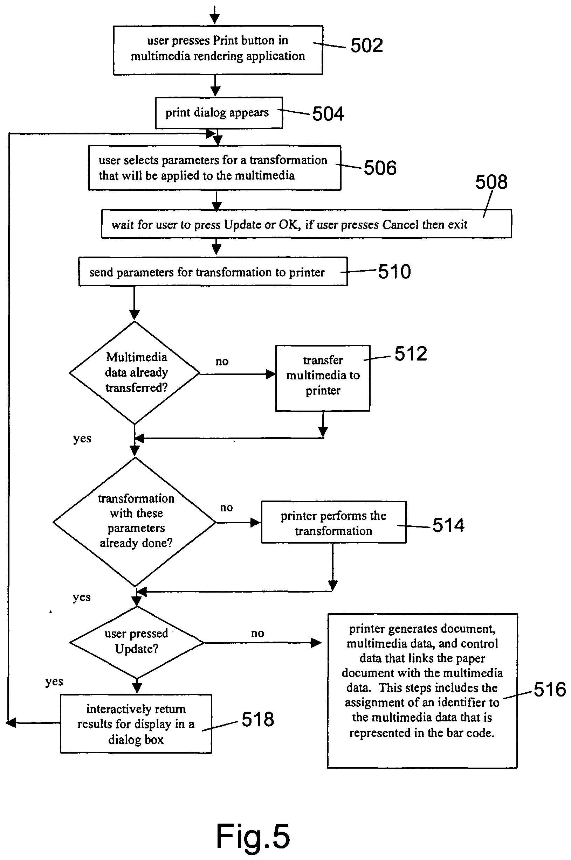

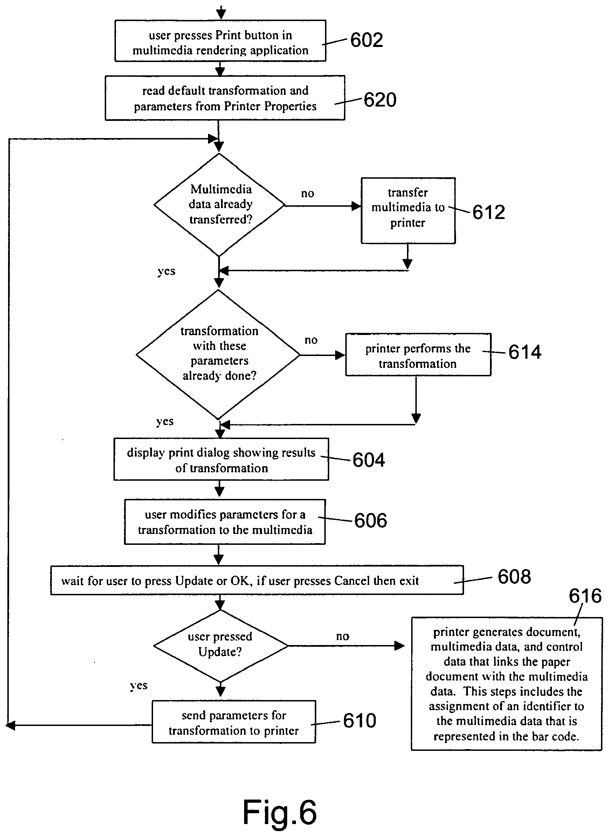

In operation, the system 200 provides methods for printing multimedia content. The user selects a print option in an MRA, and an initial print driver dialog interface (PDDI) 122 appears to the user. The initial PDDI 122 is populated with information about the abilities of the printer 102 to transform multimedia data. The initial PDDI 122 can display options available to the user for transforming the data, or it can show the result of performing a default transformation with a default set of parameters. The user can choose which of these two options the user prefers, and the user's preference can also be set in the printer's 102 properties. The flow of operations for each of these options is depicted in Figures 5 and 6, discussed below. More information about different transformations that can be performed and options available to the user for transformation is provided in the above-mentioned U.S. Patent Application entitled "Printer with Embedded Audio/Video Content Recognition and Processing," to Hull et. al., filed on March 30, 2004, Attorney Docket Number 20412-8394.

Referring now to Figure 5, there is shown a flowchart that describes the flow of operations in the system 200 when the PDDI 122 is displayed to the user before any multimedia transformation is performed. In this embodiment, the user enters a "print" command into the system by pressing 502 a print button (e.g., Figure 4) in an MRA. The user can use an initial PDDI 122 to define preferences with regard to the multimedia document to be generated before any transformation has been conducted. The user selects 506 parameters for a transformation that will be applied to the multimedia content. For example, the user can opt to have the document show a particular number of video frames, displayed in a user-defined arrangement.

The system 200 then waits 508 for the user to press the Update button or the OK button on the PDDI 122. If the user selects the Cancel button, then the system 200 exits and the PDDI 122 disappears from view. Once the user has selected the Update button or the OK button, the system 200 sends 510 parameters and other user-selection information to the printer 102. The system 200 determines if the multimedia data has already been transferred to the printer 102. As described previously, this multimedia data may be located on a PC, a cell phone, a PDA, or other device that can contain multimedia content. If the multimedia data has not yet been transferred to the printer 102, then the system 200 transfers 512 multimedia data to the printer 102, and then continues with the operation flow. If the multimedia data has already been transferred to the printer 102, then the system 200 determines whether or not the multimedia transformation with the user-defined parameters has already been performed. If not, the printer performs 514 the transformation on the multimedia data. If so, the system 200 then determines whether or not the user pressed the Update button after entering in the parameters, or if the user alternatively pressed the OK button. If the user did not press the Update button, and instead pressed the OK button, the printer 102 generates 516 a document, multimedia data, and control data that links the paper document with the multimedia data. Additionally, the system 200 assigns identifiers (e.g., a barcode) to the multimedia data, providing the user with an interface by which to access the multimedia content. If necessary, before generating the document, the printer 102 may first prompt the user for further information regarding the print job. Metadata about the multimedia data and the commands entered into the PDDI 122 are represented in the DFS 112.

If the user pressed the Update button, rather than the OK button, the user is not yet requesting that the printer 102 create a multimedia document. Instead, the user presses the Update button when the user has modified the user selection parameters in the PDDI 122, and the user wants the preview field of the PDDI 122 to be updated. If the user pressed the Update button, the system 200 will interactively return 518 results for display in an interactive PDDI 122. This allows the user to preview how the multimedia document will appear with the newly added parameter modifications. The flow of operation then returns to the point at which the user has the opportunity to select 506 parameters, and the system 200 can cycle through the flow again, continuing to modify parameters in the interactive PDDI 122 until a final document is generated.

Referring now to Figure 6, there is shown a flowchart that describes the flow of operations in the system 200 when the system 200 is configured to transfer the multimedia data, perform the default transformation, and display its results in a PDDI 122. In this embodiment, the user presses 602 a print button in a multimedia rendering application. The system 200 reads 620 the default transformation and parameters from the printer properties information stored on the printer 102, on a PC, or other location. The system 200 then determines if the multimedia data has already been transferred to the printer 102. If the multimedia data has not yet been transferred to the printer 102, then the system 200 transfers 612 multimedia data to the printer 102, and then continues with the operation flow. If the multimedia data has already been transferred to the printer 102, then the system 200 determines whether or not the transformation with the defined parameters has already been performed. If not, the printer performs 614 the transformation on the multimedia data. If so, the system 200 then displays 604 a PDDI 122 to the user, showing the results of the transformation. The user modifies 606 parameters for transformation that was applied to the multimedia content. The system 200 then waits 608 for the user to press the Update button or the OK button on the PDDI 122. If the user selects the Cancel button, then the system 200 exits and the PDDI 122 disappears from view. If the user pressed the OK button, the printer 102 generates 616 a document, multimedia data, and control data that links the paper document with the multimedia data, and the system 200 assigns an identifier to the multimedia data. If the user pressed the Update button, the system 200 will send 610 the parameters for transformation to the printer 120, and the flow of operation then cycles again.

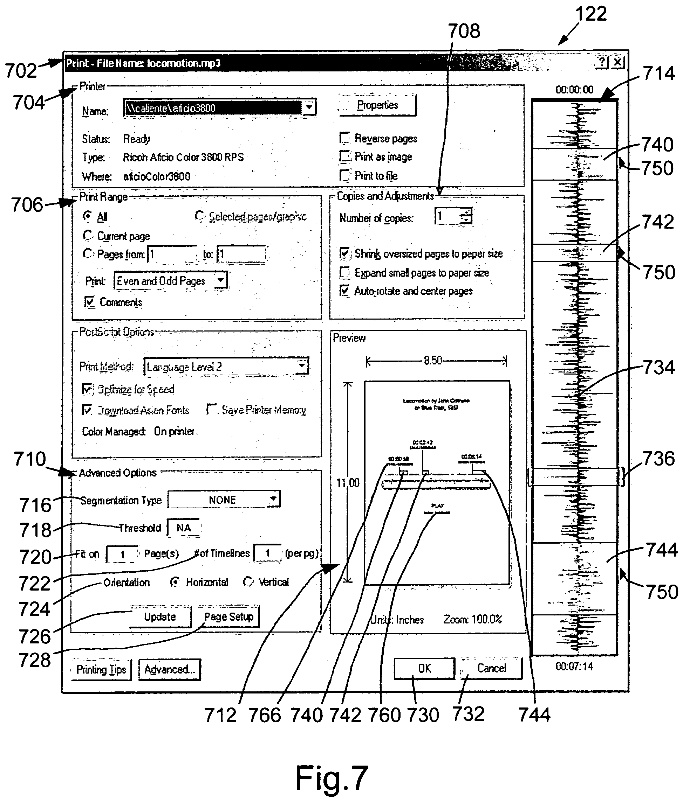

Figures 7-19, which are discussed below, show examples of a PDDI 122 that would be displayed to a user in the method of Figure 6 where the default transformation is first applied to the multimedia data before the user sees the PDDI 122. Additionally, the examples of Figures 7-19 could also be the interactive PDDI 122 described in the method of Figure 5, which allows the user to modify the results of a transformation. For examples of an initial PDDI 122 that is initially displayed to the user in the method of Figure 5, see the above-mentioned U.S. Patent Application entitled "Printer with Embedded Audio/Video Content Recognition and Processing," to Hull et. al., filed on March 30, 2004, Attorney Docket Number 20412-8394.

### AUDIO

Figure 7 shows a graphical representation of a PDDI 122 for printing user-selected ranges in an audio file. The user can input information into the fields in the PDDI 122 to designate the user's preferences regarding layout, segmentation, etc. The PDDI 122 shown in the embodiment of Figure 7 includes some fields that are found in a standard printer dialog box, such as the Printer field 704, the Print Range field 706, and the Copies and Adjustments field 708. However, the PDDI 122 also displays fields that are not found within standard printer dialog boxes, such as the Advanced Options field 710, the Preview field 712, and the Content Selection field 714.

As is found in standard print dialog boxes, the top of the PDDI 122 includes a file name field 702 that displays the name (e.g., "locomotion.mp3") of the multimedia file being printed. In the Printer field 704, the user can select which printer will carry out the print job, and other options with regard to properties of the print job, printing as a image or file, printing order, and the like. Additionally, the Printer field 704 displays the status of the selected printer, the type of printer, where the printer is located, and the like. The Print Range field 706 allows the user to make selections about what portions of a document will be printed and the like. The Copies and Adjustments field 708 permits a user to designate the number of copies to be generated in a print job, the size of the print job pages relative to the paper, the positioning of the print job pages on the paper, and the like. Although not shown, this dialog box could also include any of the various combinations of other conventional print parameters associated with outputting representations of video, audio, or text documents.

In the embodiment of Figure 7, the Advanced Options field 710 provides the user with options that are specific to the formatting and layout of multimedia content. In this embodiment, the user selects the segmentation type that the user would like to have applied to the multimedia content. In this embodiment of the invention, the user can click on the arrow in the segmentation type field 716, and a drop-down menu will appear displaying a list of segmentation types from which the user can choose. Examples of segmentation types include, but are not limited to, audio event detection, speaker segmentation, speaker recognition, sound source localization, speech recognition, profile analysis, video event detection, color histogram analysis, face detection, clustering, face recognition, optical character recognition (OCR), motion analysis, distance estimation, foreground/background segmentation, scene segmentation, automobile recognition, and license plate recognition. In the example, the user has not selected any segmentation type in the segmentation type field 716, so the segmentation type is shown as "NONE." Thus, in this example, the user manually selects an audio range within the audio waveform timeline 734 by moving a selector 736 around within the Content Selection field 714.

Each segmentation type can have a confidence level associated with each of the events detected in that segmentation. For example, if the user has applied audio event detection that segments the audio data according to applause events that occur within the audio data, each applause event will have an associated confidence level defining the confidence that an applause event was correctly detected. Within the Advanced Options field 710, the user can define or adjust a threshold on the confidence values associated with a particular segmentation. The user sets the threshold by typing the threshold value into the threshold field 718. For example, the user can set a threshold of 75%, and only events that are above this threshold (i.e., more than 75% chance that the event was correctly detected to be an applause event) will be displayed. In other embodiments, a threshold slider (not shown) is included in the PDDI 122, and the user can move the slider along a threshold bar that runs from 0% to 100% to select a specific threshold within that range.

In one embodiment, the user can also make layout selections with regard to the multimedia representation generated. The user sets, within the "Fit on" field 720, the number of pages on which the audio waveform timeline 734 will be displayed. The user also selects, within the timeline number selection field 722, the number of timelines to be displayed on each page. Additionally, the user selects, within the orientation field 724, the orientation (e.g., vertical or horizontal) of display of the timelines on the multimedia representation. For example, as shown in Figure 7, the user can choose to have one timeline displayed on one page, horizontally, and this will display the entire audio waveform timeline 734 horizontally on a page. As another example, the user can choose to have the audio waveform timeline 734 broken up into four portions that are displayed vertically over two pages (i.e., two timelines per page).

In the embodiment of Figure 7, there are also shown various buttons, including an Update button 726, a Page Setup button 728, an OK button 730, and a Cancel button 732. As described regarding Figures 5 and 6, the user can select the Update button 726 when the user has modified the print job parameters within the PDDI 122, and the user would like to see an updated image of how the multimedia representation will appear. The image of the multimedia document shown in the Preview field 712 will be updated to display any new changes the user has made within the PDDI 122. Alternatively, the system can be designed to automatically update the Preview field 712 any time changes are made in the PDDI 122. In one embodiment, when the user selects the Page Setup button 728, a different dialog interface box is displayed to the user, giving the user various print formatting options. This is discussed in more detail below. The embodiment of Figure 7 also includes an OK button 730, and when the user selects this button, the printer then prepares to generate a multimedia document under the current user-defined preferences set in the PDDI 122. If the user selects the Cancel button 732 at any point in the process, the creation of the print job ends and the PDDI 122 disappears.

In the embodiment of Figure 7, the Content Selection field 714 shows an audio information waveform on a timeline displaying the audio data selected by the user for transformation and printing. In this example, the top of the audio waveform timeline 734 shows the time "00:00:00," or the start time of this audio content. The bottom of the audio waveform timeline 734 shows the time "00:07:14," or the end time of the audio content. Thus, the audio information in this example is seven minutes and fourteen seconds long. The user can slide the selector 736 along the audio waveform timeline 734 to select certain segments of the audio content for which corresponding markers or identifiers will be displayed on the multimedia document generated. For example, the user can use a mouse or other selection device to click on and slide the selector 736 to the segment 740, which is shown as a selected segment in Figure 7. In one embodiment, once the selector 736 is located at the segment of audio content that the user would like to select, the user can click or double-click on the selector 736 to select segment 740. In this embodiment, the user can select a longer segment of audio content by clicking on and dragging the selector 736 across the distance of the audio segment that the user would like to select. The audio waveform timeline 734 could also be displayed in a number of alternative manners, such as showing a horizontal timeline, showing more than one timeline side-by-side, showing a different waveform appearance, showing a waveform that is colored according to a particular schematic, and the like.

In the embodiment shown in Figure 7, the user selected three regions of the audio waveform timeline 734 to be marked on the multimedia document. The user selected segment 740, segment 742, and segment 744. Each of these selected segments has a separate corresponding marker or identifier 166 (e.g., a barcode) displayed on the print preview of the multimedia document. For example, in the Preview field 712 of Figure 7 there is shown an image of a multimedia document. The document shows one page including one horizontal timeline displayed with the beginning of the audio timeline to the left and the end to the right. In this example, the full audio waveform timeline 736 is displayed on the multimedia document page. Additionally, the timeline displayed in the Preview field 712 includes three markers or identifiers 166, one for segment 740, one for segment 742, and one for segment 744. Each marker 166 includes a barcode and a time stamp giving the location of the segment within the audio content. In addition, the Figure 7 example shown in the Preview field 712 includes a header, which can include information about the audio content (e.g., the title of the audio content, the musician who created the audio content, and the date of the audio content. The multimedia document further includes a play marker 760 or play identifier, which can be located anywhere in the document (i.e., bottom, center).

The user can play the audio content in a number of ways. For example, the user can click on the play selectors or play arrows 750 on the audio waveform timeline 734 to cause the segment to begin to play. Additionally, the system can be configured so that selecting a play arrow 750 will cause the full audio content on the audio waveform timeline 734 to begin to play. The user can also right click on any one of the selected segments to delete the corresponding marker on the multimedia document. A paper multimedia representation also can provide an interface for playing the audio content. A user can select any of the markers (i.e., scan the barcodes) for any of the selected segments on the paper documents, and this will cause the selected audio segment to play. For example, the user can scan a barcode with a cell phone or PDA device with a barcode scanner. The user can listen to the selected clips on the cell phone or PDA, or the user can hear the content via the sound card on his/her PC. Additionally, the user can select the play marker 760 that acts as a pause button, so that if the user has selected any of the markers on the page and the corresponding audio content is playing, the user can pause this by selecting the play marker 760. The user can resume the playing of the audio content by selecting the play marker 760 again, or the user can select another marker on the page to play the corresponding audio content.

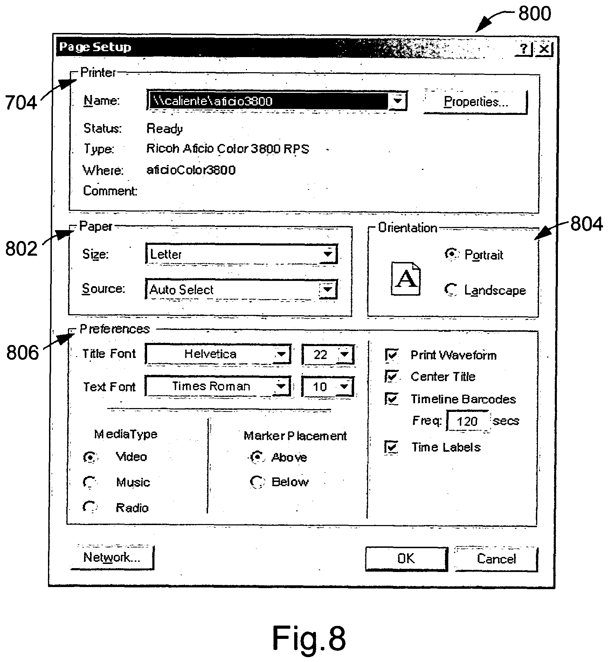

Referring now to Figure 8, there is shown of a graphical representation of a PDDI 122 for multimedia document page setup, or a page setup dialog interface 800. When a user selects the Page Setup button 728, discussed previously, the page setup dialog interface 800 appears and the user can select formatting options. In the Paper field 802, the user can select the paper size (e.g., letter) and paper source (e.g., auto select) for the multimedia print job. In the Orientation field 804, the user can designate whether the document will be oriented in portrait or landscape format. In the Preferences field 806, the user can set the title and text font types and sizes (e.g., Helvetica, size 22 inches), the media type (e.g., video), the location of markers on the page (e.g., above waveform), and the user can decide whether or not to print a waveform, a center title, timeline barcodes and their frequency, and time labels. Each of the page setup options shown in the page setup dialog interface 800 can alternatively be incorporated into the main PDDI 122, such as the PDDI shown in Figure 7. The page setup options are not limited to those shown in Figure 8, and in other embodiments, various different page setup options are provided to the user.

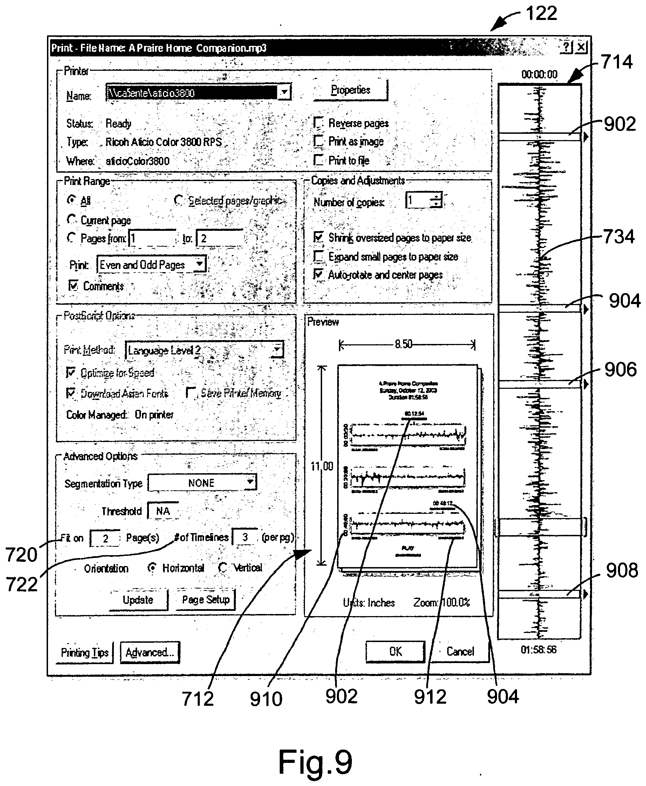

Referring now to Figure 9, there is shown a graphical representation of a PDDI 122 that generates a two-page summary of an audio file. The PDDI 122 is similar to that shown in Figure 7, however the user has selected, in the timeline number selection field 722, to include three timelines printed per page of the multimedia document. Additionally, the user has selected, in the page fit field 720 to print the multimedia document over two pages. The user has selected, in the Content Selection field 714, four segments of audio content for which markers will be displayed. The selected segments include segment 902, segment 904, segment 906, and segment 908.

The multimedia document shown in the Preview field 712 of Figure 9 displays three timelines on a page, and shows that two pages have been generated. The time stamps 910 at the beginning of each horizontal timeline display the start time of that timeline. The timelines shown on the top page in the Preview field 712 correspond to half of the audio waveform timeline 734 shown in the Content Selection field 714. More specifically, the multimedia document displays the upper half of the audio waveform timeline 734, split into three separate timelines. The markers corresponding to selected segments 902 and 904 are displayed on the page shown in the Preview field 712. The markers corresponding to selected segments 906 and 908 are displayed on the second page, the content of which is not visible in the Preview field 712.

The document in the Preview field 712 of Figure 9 additionally includes timeline markers 912 near the beginning and the end of each of the three timelines displayed on the page. These provide the user with additional intermediate interface points in the printed document through which the user can access the multimedia content. The timeline markers 912 denote locations in the audio content that correspond to the beginning or end of each printed timeline, and the user can access these locations by selecting the marker (i.e., scanning the barcode, as discussed previously) to cause the audio content to begin to play at that location in the audio file. The timeline markers 912 in Figure 9 are displayed below the timelines, but these timeline markers 912 could also be displayed above or near the timelines. These timeline markers 912 will also appear in the printed document, providing another interface by which user can access multimedia content at defined locations.

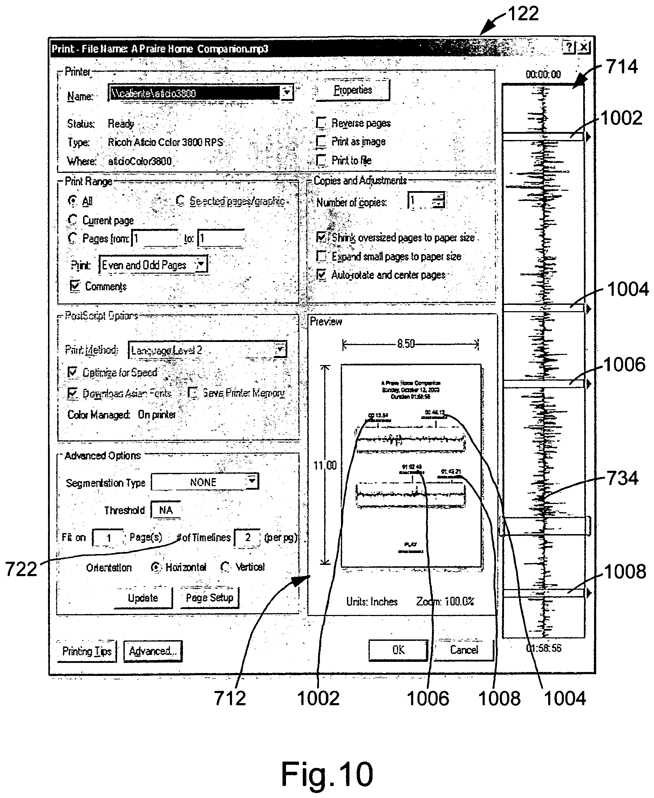

Figure 10 shows a graphical representation of a PDDI 122 in which the timeline is divided into two parts. This PDDI 122 is similar to that shown in Figures 7, but user selected in the "Fit on" field 720 that the output should be constrained to a single page. The timeline number selection field 722 specifies two timelines per page. Thus, the audio waveform timeline 734 shown in the Content Selection field 714 is divided into two and the halves are displayed on the multimedia document as two horizontal timelines. The user has again selected segments within the audio waveform timeline 734, and the markers corresponding to these segments are displayed in the multimedia document. Specifically, the user has selected segments 1002, 1004, 1006, and 1008.

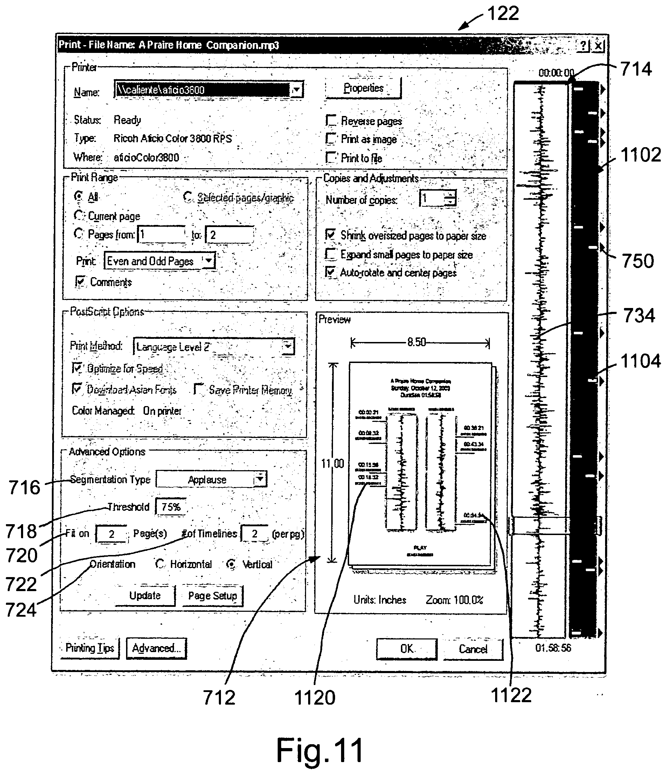

Referring now to Figure 11, there is shown a graphical representation of a PDDI 122 in which the timeline is divided into two vertical parts, and a segmentation type and threshold level have been applied. In this example, the user has selected, in the timeline number selection field 722, to include two timelines printed per page of the multimedia document. Additionally, the user has selected, in the "Fit on" field 720 to print the multimedia document over two pages. The user has also selected, in the orientation field 724 to display the timelines vertically in the multimedia document. Thus, the audio waveform timeline 734 shown in the Content Selection field 714 is divided in half, and the upper half is displayed on the page shown in the Preview field 712. The lower half is included on the second page, the content of which is not displayed in the Preview field 712.

In the example of Figure 11, instead of manually selecting segments of the audio waveform timeline 734 with the selector 736, the user has applied a segmentation type to the audio data. The user has selected, in the segmentation type field 716, to conduct audio detection for applause events on the audio data. The system 200 will search for all applause events within the audio data. However, the user has also selected, within the threshold selection field 718, to apply a threshold of 75%. Thus, only audio events that are more than 75% likely to be applause events will be displayed in the PDDI 122. The applause events are displayed in the Segmentation Display field 1102. Each event segment 1104 shown within the Segmentation Display field 1102 corresponds to an event that is more than 75% likely to be an applause event.

The event segments 1104 are shown as staggered boxes in Figure 11. However, these might also be lines stretching across the Segmentation Display field 1102 or other visual indicators. The user can right click on any one of the event segments 1104 to delete the event segment 1104. Markers (i.e., a barcode, an RFID tag, a URL, or some other indication for the location where the multimedia data can be retrieved from) 1120 corresponding to each applause event segment 1104 are shown in the multimedia document displayed in the Preview field 712. In this example, timestamps 1122 are also included with each marker 1120. The user can click on the arrows 750 located near each event segment 1104 to play the audio content that likely contains applause. Thus, the user can check the event segments 1104 shown, before printing the document, to ensure that the event segments 1104 really do correspond to applause events. Additionally, the user can select the markers in the printed document that correspond to applause events to play the applause content. Besides the audio detection event example described in Figure 11, there are a number of other segmentation types that can be applied to audio content or other kinds of multimedia content. Each of these segmentation types can be displayed in a menu in the segmentation type field 716, and the user can select from the menu which segmentation type should be applied. The following is a summary of examples of various different segmentation types that can be applied. Speaker segmentation is one example, in which each segment corresponding to different speaker is shown in a different color or by a different icon. The segments that were produced by the same speaker are shown in the same color or by the same icon. Speaker recognition is another example, in which the name of each speaker is accompanied by a confidence that it was detected correctly. The PDDI 122 includes a series of check boxes that let the user choose which speakers to display. The user can alternatively apply sound source localization, in which the direction from which sound was detected is displayed as a sector of a circle. Each sector is accompanied by a confidence that it was detected correctly. The user interface includes a series of check boxes arranged around the circumference of a prototype circle that let the user choose which directions to display. Speech recognition is another example of a segmentation type, in which the timeline displays text and optionally confidence values for each word or sentence spoken during the audio content.

### VIDEO

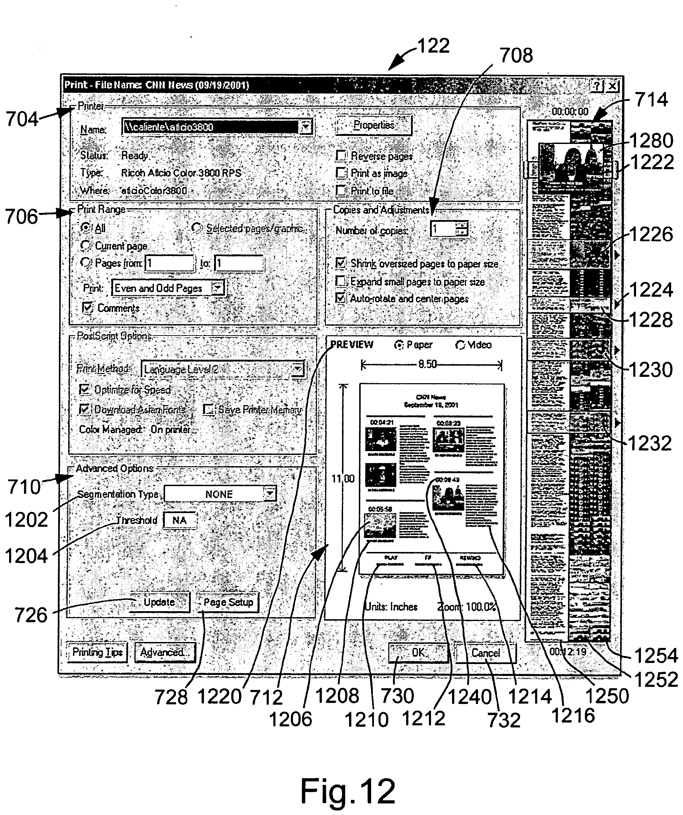

Figure 12 illustrates a graphical representation of a PDDI 122 for generating a video paper document. As with the PDDI 122 for generating an audio document, the user can input information into the fields in the PDDI 122 for generating a video document. The PDDI 122 shown in the embodiment of Figure 12 includes some fields that are found in a standard printer dialog box, such as the Printer field 704, the Print Range field 706, and the Copies and Adjustments field 708. However, the PDDI 122 also displays fields that are not found within standard printer dialog boxes, such as the Advanced Options field 710, the Preview field 712, and the Content Selection field 714.

In the embodiment of Figure 12, the Advanced Options field 710 provides the user with options that are specific to the formatting and layout of multimedia content. In this embodiment, the user selects the segmentation type in the segmentation type field 1202 that the user would like to have applied to the video content. The menu of segmentation types for generating a video document will include at least the segmentation types already discussed previously in reference to creating an audio document in Figure 7. In the example, the user has not selected any segmentation type in the segmentation type field 1202, so the segmentation type 1202 is shown as "NONE." Thus, in this example, the user manually selects start and end times for segments of a given video file by moving the selector 1222 within the Content Selection field 714 and clicking on the portions of the video timeline display that the user would like to select.

Within the Advanced Options field 710, the user can define or adjust a threshold on the confidence values associated with a particular segmentation, as discussed previously. The user sets the threshold by typing the threshold value into the threshold field 1204. For example, the user can set a threshold of 75%, and only frames that are above this threshold (i.e., more than 75% chance that the frame includes a face in a face detection analysis) will be displayed. In other embodiments, a threshold slider is included in the PDDI 122, and the user can move the slider along a threshold bar that runs from 0% to 100% to select a specific threshold within that range. In addition, the buttons shown in the embodiment of Figure 12, including an Update button 726, a Page Setup button 728, an OK button 730, and a Cancel button 732, function in a manner similar to the corresponding buttons discussed regarding Figure 7.

In the embodiment of Figure 12, the Content Selection field 714 shows video frames and text on a timeline, which were extracted at regular intervals throughout some defined video content. For example, the system can save video frames of a CNN News segment every second, and the video timeline will display all or at least some of the saved frames on the video timeline. The extracted frames will be displayed with the frames starting at time "00:00:00," in the CNN News segment, at the top of the timeline and continuing to be displayed along the timeline until the end, at time "00:12:19." In this example, the top of the video timeline shows the time "00:00:00," or the start time of this video content displayed in the timeline. The bottom of the video timeline shows the time "00:12:19," or the end time of the video content. In some embodiments, the video frames can be displayed in reverse order along the timeline.

Additionally, there are three columns 1250, 1252, and 1254 displayed in Content Selection field 714. One column 1250 displays text information, and the other two columns 1252 and 1254 display video frames. The video frames displayed in Figure 12 in the two columns 1252 and 1254 are displayed side-by-side. For example, the first frame selected is displayed at the top left of the timeline, and the second frame selected is displayed next to the first frame. The third frame selected is displayed below the first frame, and the fourth frame selected is displayed below the second frame. The video frame display continues along the timeline in this pattern. In other embodiments, the video frames could be displayed in different patterns, or could be displayed in one column, or in more than two columns along the timeline. The transcript of text is also displayed along the timeline in Figure 12, from top to bottom, generally near the corresponding video frame. In other embodiments, the text is displayed in two or more columns, or on the other side of the video frames, or is not displayed at all on the timeline.

The user can slide the selector 1222 along the video timeline to select certain segments of the video content, which will be displayed on the multimedia document generated. In one embodiment, once the selector 1222 is located at the segment of video content that the user would like to select, the user can click on the selector 1222 to select segment 1226. The video timeline could also be displayed in a number of alternative manners, such as showing a horizontal timeline, showing more than one timeline side-by-side, showing a different video frame appearance, and the like. As discussed above, while the video timeline in the embodiment of Figure 12 displays both video frames and associated text, the video timeline can also display only video frames without the associated text, in some embodiments. In these embodiments where the timeline displays only video frames, the multimedia representation generated can still include both text and video frames, or it can be limited to video frames alone.

In the example shown in Figure 12, the user selected four regions of the video timeline to be marked on the multimedia document. The user selected segment 1226, segment 1228, segment 1230, and segment 1232. Each of these selected segments will be displayed as one or more video frames and associated text on the multimedia document. In the Preview field 712 of Figure 12 there is shown an image of a multimedia document. The document of the Figure 12 example shows one page including five video frames 1206 and associated text 1216. The displayed video frames 1206 and associated text 1216 each correspond to the segments that were selected in the Content Selection field 714. For example, the first two video frames 1206 starting at the top left of the multimedia document correspond with the selected segment 1226. In the Figure 12 example, the video frame 1206 shown in the bottom left hand corner of the multimedia document corresponds to selected segment 1228 on the video timeline. The video frame 1206 in the top right corner of the document corresponds to selected segment 1230, and the video frame 1206 in the bottom right corner corresponds to selected segment 1232.

Additionally, the location of each displayed video frame within the video timeline is displayed above each video frame as a time marker 1240. In Figure 12, each time marker 1240 corresponds to a segment within the time frame of "00:00:00" to "00:12:19," the total length of the video content displayed on the video timeline. For example, the video frame 1206 at the top left hand corner of the multimedia document for a CNN News segment includes a time marker 1240 of "00:04:21." Thus, the video content associated with this video frame 1206 begins at four minutes and twenty-one seconds into the CNN News segment. Additionally, the text 1216 associated with this video frame 1206 displays a transcript of the video frame 1206, and the transcript begins at four minutes and twenty-one seconds into the CNN News segment.

The user can also play the video content in a number of ways. For example, the user can click on the play arrows 1224 next to each selected segment on the video timeline to cause the segment to begin to play. In the embodiment of Figure 12, the video frames 1206 displayed on the multimedia document each have a corresponding marker or identifier 1208 (e.g., a barcode) located below the video frame 1206. These identifiers 1208 also can provide an interface for playing the video content. A user can select any of the identifiers 1208 (i.e., scan the barcodes) for any of the selected segments on the document, and this will cause the selected video segment to play, as discussed previously in reference to audio segments.

When a user selects an identifier 1208, the associated video content will begin to play starting at the time displayed on the corresponding time marker 1240. In the Figure 12 embodiment, the dialog associated with the video frame 1206 will begin at the start of the associated transcript of text 1216. For example, if the user scans the barcode shown below the video frame on the top left-hand corner of the multimedia document shown in the Preview field 712 of Figure 12, a video clip of the CNN News segment will play, beginning four minutes and twenty-one seconds into the news show.

The multimedia document shown in the embodiment of Figure 12 further shows control markers or identifiers for controlling video content display. In Figure 12, there is shown a play marker 1210, a fast forward (FF) marker 1212, and a rewind marker 1214. The user can select the play marker 1210 in a printed document (i.e., by scanning the barcode with a cell phone or other device), which acts as a pause button. If the user has selected any of the identifiers 1208 on the printed page and the corresponding video content is playing on some type of display device (not shown), such as a cell phone, the user can pause this by selecting the play marker 1210. The user can resume the playing of the video content by selecting the play marker 1210 on the printed document again, or the user can select another identifier 1208 on the page to play the corresponding video content. Additionally, if the user has selected any of the identifiers 1208 on the printed page and the corresponding video content is playing, the user can fast forward or rewind through the video clip by selecting the fast forward marker 1212 or the rewind marker 1214, respectively.

In the Figure 12 example, the multimedia document shown in the Preview field 712 also includes a header, which can include information about the video content (e.g., the title of the video content and the date of the video content). For example, the header in Figure 12 identifies the video content as "CNN News," and the news segment was played on "September 19, 2001."

The Preview field 712 shown in the Figure 12 embodiment further includes a preview content field 1220. This preview content field 1220 marks whether a user is previewing a paper version of the multimedia document or previewing the video content associated with a video frame 1206 displayed on the multimedia document. The user can preview the selected video content associated with a video frame 1206 through a video player embedded in the PDDI 122 by selecting the "Video" radio button.

In the Figure 12 embodiment, the multimedia document is displayed in the Preview field 712 according to one particular layout. However, the document can be arranged in a number of different formats. For example, the document could include no header, the time markers 1240 could be displayed below the video frames 1206, the identifiers 1208 could be shown above the video frames, and the like.

Figure 12 also shows a preview window 1280 displayed on the video timeline in the Content Selection field 714. In some embodiments, a preview window 1280 will appear as the user moves selector 1222 along the video timeline. The preview window 1302 will display an image of the video frame over which the selector 1222 is positioned. The preview window 1280 can appear directly over the selected segment, or it could alternatively appear under, above, or next to the segment.

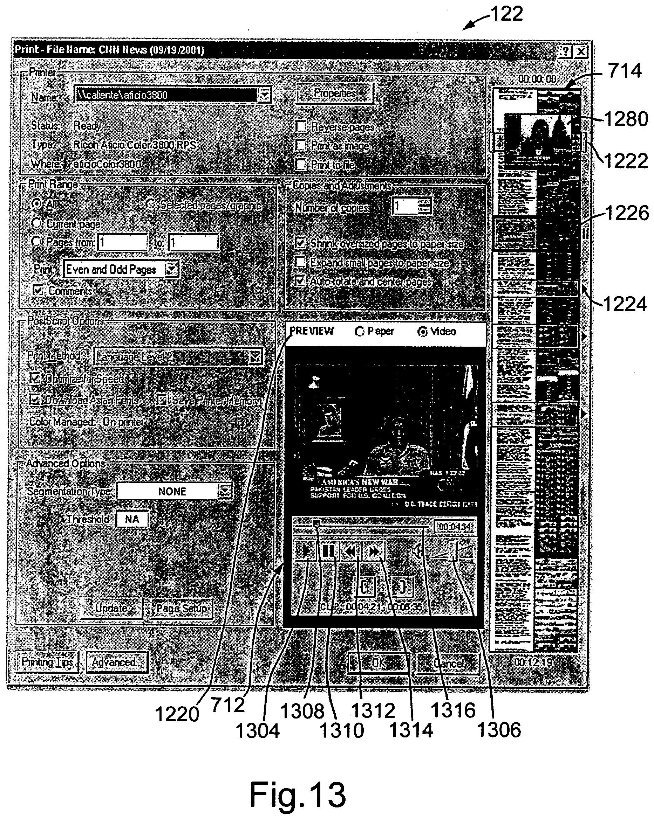

Referring now to Figure 13 there is shown a graphical representation of the PDDI 122 of Figure 12, in which the user is previewing a video clip. A user can select a play arrow 1224 located near each selected segment along the video timeline in the Content Selection field 714 to cause the clip to begin to play. Alternatively, the system can be configured so that the full video content represented by the video timeline will begin to play when the play arrow 1224 is selected. When the video is playing in the Preview field 712, the associated segment along the timeline (e.g., segment 1226) will be highlighted, and the play arrow 1224 next to the segment will change form (e.g., double lines) to denote that the segment is being played. Alternatively, the system can be designed so that the user can select a video frame and cause it to begin to play just by clicking or double-clicking on the particular video frame in the multimedia document in the Preview field 712 or by clicking on the frame in the video timeline. Additionally, in some embodiments, if a user right-clicks on a segment (e.g., 1224) in the video timeline, a dialog box will appear giving the user an option to play the video (staring at the beginning of the segment). The user can select the play option in the dialog box, and the video frame will begin to play in the Preview field 712.

When the user selects a particular video segment for preview, a media player that is embedded in the PDDI 122 starts to play the video segment in the Preview field 712 from the start of the video segment. For example, in Figure 13, the video segment can begin to play at time four minutes and twenty-one seconds into the news segment, and this corresponds to the beginning of the selected clip that runs from "00:04:20-00:06:35." As discussed previously, the video content could alternatively start playing from "00:00:00" on the video timeline, rather than at the specific clip. Alternatively, the system may be designed such that the media player does not begin playing the video clip until the user selects the play button 1304. Thus, upon selecting a video segment to be previewed, the media player appears with the slider 1308 at the beginning of the segment, the user must actually click the play button 1304 to cause the content to begin to play.

The media player in the Preview field 712 also includes the features of many standard multimedia players (e.g., Microsoft Windows Media Player), such as a pause button 1310 for stopping/pausing the display of the video clip, a rewind button 1312 for rewinding within the video content, a fast forward button 1314 for fast forwarding within the video content, and a volume adjuster 1306 for setting the volume for display. A slider 1308 is also included, which can allow the user to move around within the video content. The slider bar 1316, along which the slider moves 1308, can correspond to the length of the full video content displayed along the time line or it can correspond only to the length of the clip. The user can click on and drag the slider 1308 along the slider bar 1316 to move around within the video content. The fast forward button 1314 and the rewind button 1312 can be configured to allow the user to only move within the selected segment, or can alternatively allow the user to move within the full video content associated with the video timeline. The media player can be missing any one of the control buttons shown in Figure 13, or it can include other buttons for controlling display of a video.

Figure 13 also shows a preview window 1280 displayed on the video timeline in the Content Selection field 714, similar to that shown in Figure 12. This allows the user to preview the video content in the Content Selection field 714.

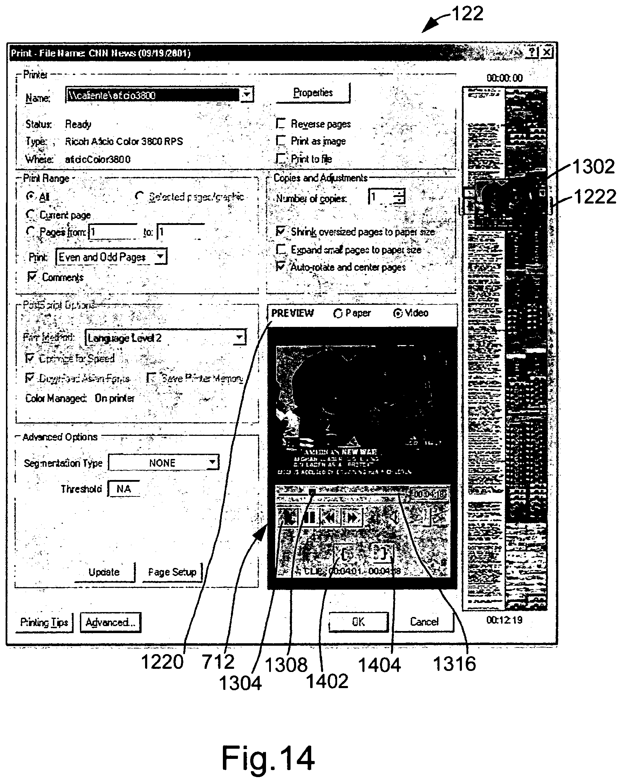

Referring now to Figure 14, there is shown a graphical representation of a PDDI 122 in which a video clip is being displayed in the Preview field 712. Figure 14 shows the creation of a segment through use of the beginning marker button 1402 and the end marker button 1404 included in the media player in this embodiment. The media player can be designed so that the beginning of the slider bar 1316 corresponds with the beginning of the video content associated with the video timeline (e.g., at "00:00:00") or with the beginning of the selected clip. When the video content is playing, the user can use beginning marker button 1402 and end marker button 1404 to mark segments of interest. For example, if a user is interested in video content within a news segment that discusses a particular actor, the user can play the video content in the media player. When the user reaches a segment discussing the actor, the user can click beginning marker button 1402 to mark the location. When the segment ends, the user can click end marker button 1404. The user can continue to do this throughout the news segment, marking segments of interest to be printed or for any other purpose.

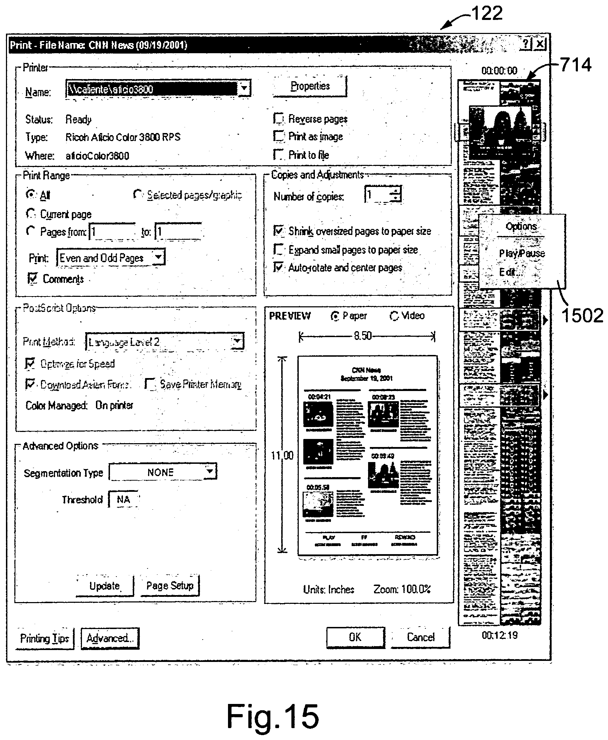

Figure 15 illustrates a graphical representation of the PDDI 122 shown in Figure 12, in which the user has used a mouse or other pointer device to right-click on the video timeline shown in the Content Selection field 714. When the user right-clicks on a video segment in the video timeline, a dialog box 1502 appears, providing the user with options regarding the video frame. The user can select, within the dialog box 1502, to play the video associated with the segment, or pause the play of the video if it is currently playing. Alternatively, the user can choose to edit the segment. The editing option is discussed in more detail below. The dialog box 1502 can appear over the selected segment in the video timeline or anywhere near the video timeline. The dialog box 1502 can additionally include other control options besides those shown in Figure 15, such as a rewind option or a fast forward option.

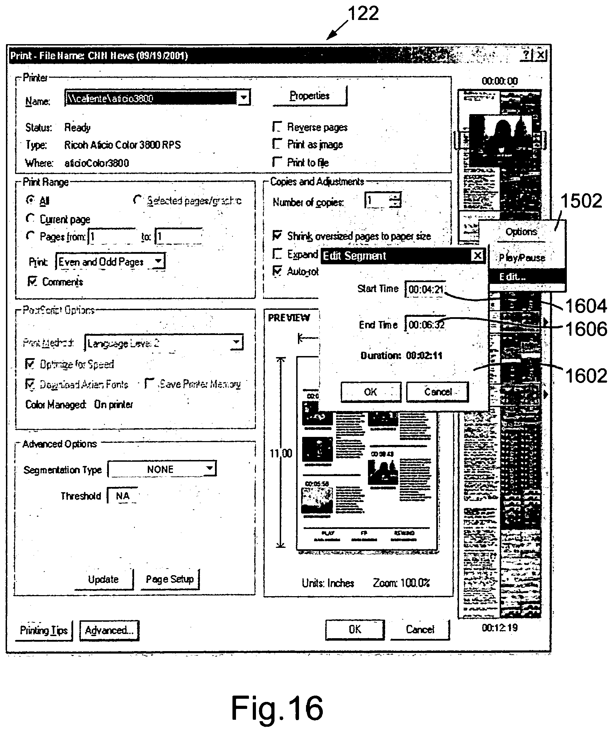

Referring now to Figure 16 there is shown a graphical representation of the PDDI 122 of Figure 15 in which the user has selected the edit option in the dialog box 1502. Upon selecting the edit option in the dialog box 1502, an edit dialog box 1602 appears allowing the user to select further options. In the edit dialog box 1602, the user can modify the start time or the end time for a segment by modifying the start time field 1604 and the end time field 1606. Thus, the user can choose to have the segment include some of the time that comes before or after the segment. For example, the user may be interested in seeing the video content that occurred in a CNN News segment 45 seconds before the defined start time for the segment because there may be an introduction or some lead-in in which the user has an interest. Additionally, the user may be interested in seeing the video content that comes a few seconds after the defined end time for a segment. The user can alternatively modify the start and end time of a segment to shorten the segment and remove extraneous content in which the user does not have an interest. After modifying either the start time, the end time, or both, the user can select the OK button to apply the modifications, or the user can select the Cancel button to end the task and make the edit dialog box 1602 disappear.

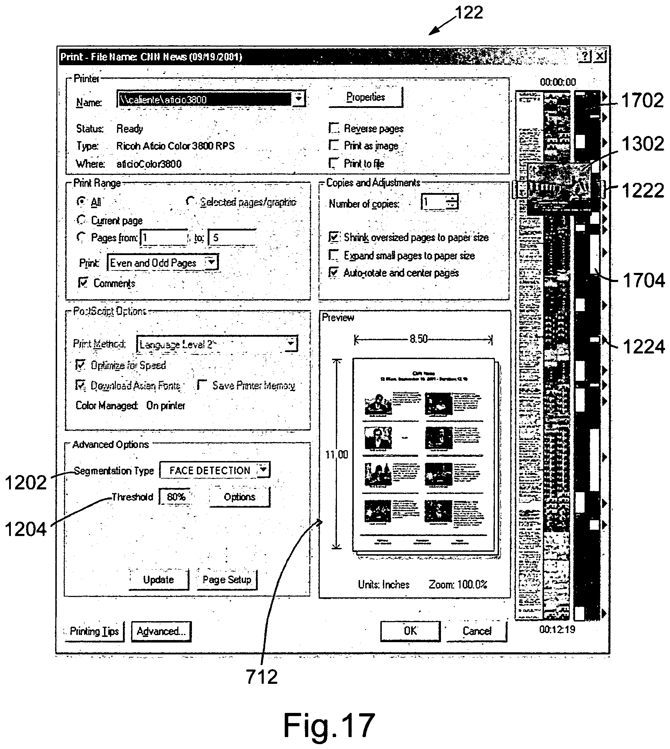

In the example of Figure 17, instead of manually selecting segments of the video timeline with the selector 1222, the user has applied a segmentation type to the video data. The user has selected, in the segmentation type field 1202, to conduct face detection, in which the system will search for images of faces within the video content. When face detection is selected, the PDDI 122 shows segments along a timeline that contain face images. Each segment can be accompanied by an integer that expresses the number of faces detected in a clip as well as a confidence value. The user has also selected, within the threshold selection field 1204, to apply a threshold value of 80%. Thus, only video frames that are more than 80% likely to include face images will be displayed in the PDDI 122. The face detection results are displayed in the Segmentation Display field 1702. Each event segment 1704 shown within the Segmentation Display field 1702 corresponds to a video frame or set of video frames that are more than 80% likely to include a face image.

The event segments 1704 are shown as staggered boxes in Figure 17. However, these might also be lines stretching across the Segmentation Display field 1702 or other visual indicators. The user can right click on any one of the event segments 1704 to delete the event segment 1704. Markers (e.g., barcodes) corresponding to the event segments 1704 can be shown in the multimedia document displayed in the Preview field 712. The user can click on the play arrows 1224 located near each event segment 1704 to play the video content that likely contains a face image. Additionally, a preview window 1302 appears as the user moves the selector 1222 along the video timeline, providing the user with an opportunity to view the video frames in the event segments 1704 to ensure that a face image is present. Additionally, the system might be configured to merge video content showing an image of the same face into one video frame, rather than displaying a separate video frame for each instance of a particular face image.

Besides the face detection example of Figure 17, there are numerous other segmentation types that can be applied to video content or other kinds of multimedia content. Each of these segmentation types can be displayed in a menu in the segmentation type field 1202, and the user can select from the menu which segmentation type should be applied. The following is a summary of examples of various different segmentation types that can be applied. Video event detection is a segmentation type that a user can apply, in which the PDDI 122 shows the results of applying a video event detection algorithm along a timeline. Examples of video events include the cases when people stood up during a meeting or when people entered a room. Color histogram analysis is another segmentation type that a user can apply, in which the PDDI 122 shows the results of applying a color histogram analysis algorithm along a timeline. For example, the PDDI 122 could show a hue diagram at every 30-second interval, allowing an experienced user to quickly locate the portions of a video that contain sunsets. In addition, clustering can be applied to cluster the face images so that multiple instances of the same face are merged into one representation face image.

Face recognition is another segmentation type, in which the PDDI 122 shows names along a timeline that were derived by application of face recognition to video frames at corresponding points along the time line. Also, a series of checkboxes are provided that let the user select clips by choosing names. Optical character recognition (OCR) is a segmentation type, in which OCR is performed on each frame in the video content, and each frame is subsampled (i.e., once every 30 frames). The results are displayed along a timeline. A text entry dialog box is also provided that lets the user enter words that are searched within the OCR results. Clips that contain the entered text are indicated along the timeline. In addition, clustering can be applied so that the similar results in performing OCR to each frame are merged. Clusters that contain the entered text are indicated along the timeline.

In addition to the above segmentation types, there are other examples of that could be applied. Motion analysis is another segmentation type, in which the PDDI 122 shows the results of applying a motion analysis algorithm along a timeline. The results can be shown as a waveform, for example, with a magnitude that indicates the amount of detected motion. This would allow an experienced user to quickly locate the portions of a video that contain a person running across the camera's view, for example. Distance estimation is another segmentation type, in which the PDDI 122 shows the results of applying a distance estimation algorithm along a timeline. For example, in a surveillance camera application using two cameras a known distance apart, the distance of each point from the camera can be estimated. The user can set the threshold value to select portions of a given video file to print, based on their distance from the camera. For example, the user may wish to see only objects that are more than 50 yards away from the camera. Foreground and background segmentation can also applied, in which the PDDI 122 shows the results of applying a foreground/background segmentation algorithm along a timeline. At each point, the foreground objects are displayed. A clustering and merging algorithm can be applied across groups of adjacent frames to reduce the number of individual objects that are displayed. A user can set the threshold value to select portions of a given video file to print based the confidence value of the foreground/background segmentation, as well as the merging algorithm. Scene segmentation is another type that the user can apply, in which the PDDI 122 shows the results of applying a shot segmentation algorithm along a timeline. Each segment can be accompanied by a confidence value that the segmentation is correct.

Segmentation types for recognizing automobiles or license plates can also be applied. Automobile recognition might be useful, for example, to a user who operates a surveillance camera that creates many hours of very boring video. Such a user often needs to find and print only those sections that contain a specific object, such as a red Cadillac. For this purpose, each frame in the video is input to an automobile recognition technique and the results are displayed along a timeline. License plate recognition might also be useful to a user operating a surveillance camera and may need to search the surveillance video for sections containing a specific license plate number. For this purpose, each frame in the video is input to a license plate recognition technique and the results (plate number, state, plate color, name and address of plate holder, outstanding arrest warrants, criminal history of the plate holder, etc.) are displayed along a timeline. With either automobile or license plate recognition, the user can set a threshold value to select portions of a given video file to print based on the confidence values that accompany the automobile or license plate recognition results. A text entry dialog box is also provided that allows the user to enter identifiers for the make, model, color, and year for an automobile, or plate number, state, and year, etc. for a license plate. These text entries are searched for within the recognition results. Clips that contain the entered information are indicated along the timeline.

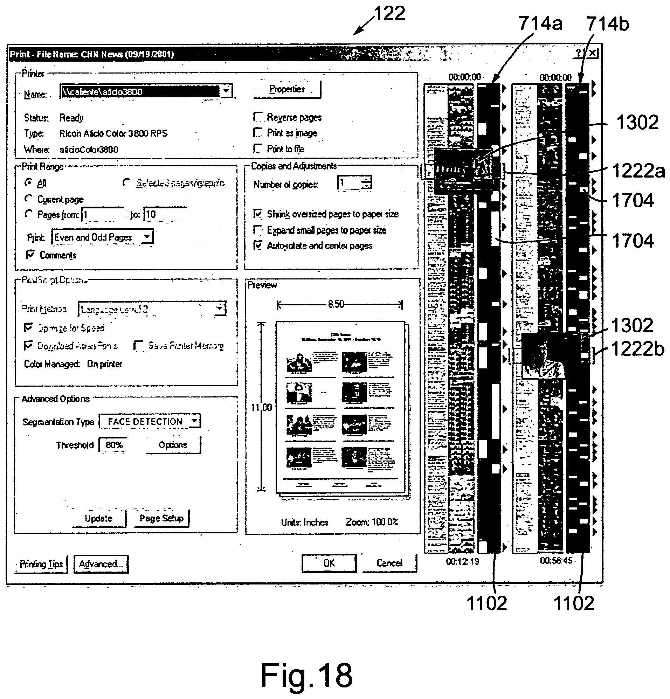

Referring now to Figure 18 there is shown a graphical representation of a PDDI 122 that includes video content from multiple sources displayed on more than one timeline. For example, the video content could originate from two different CNN News segments, or it could originate from both a CNN News segment and a CSPAN news segment. The system can be configured to print video frames from one news segment on one page of the multimedia document and video frames from another news segment on another page. Figure 18 displays two separate Content Selection fields, 714a and 714b, each with a separate video timeline displaying extracted video frames and associated text. Each video timeline includes a selector, 1222a and 1222b for making selections within the video timelines and event segments 1704 that denote frames in which a face image was detected with a more than 80% chance. Each video timeline also includes a separate Segmentation Display field 1102 associated with it that shows the even segments 1704 that resulted from the application of face detection to that video source. Thus, the user can independently move selector 1222a and 1222b around each timeline until the user has viewed the preview windows 1302 and determined which video frames to select for display in a multimedia document. While Figure 18 shows two video timelines, it is also possible for the user to compare multiple sources, and thus generate multiple timelines in the PDDI 122.

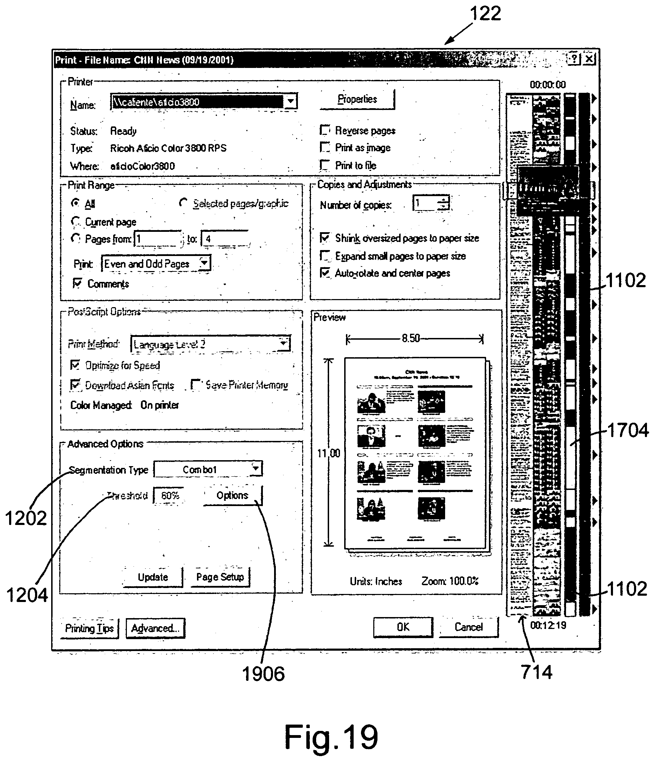

The user can apply a number of different segmentation types to video content using the PDDI. The user may choose to apply both audio detection and speaker recognition to one twelve-minute-long CNN News show, for example. Figure 19 shows the PDDI 122 of Figure 17, in which face detection was applied. However, Figure 19 shows the results of the application of both the face detection video OCR. The system is configured, in some embodiments, to include a drop-down menu in the segmentation type field. The menu can list each segmentation type, one-by-one, within the menu. Thus, in this embodiment, the user can click on more than one segmentation type in the menu (i.e., by holding down the CTRL key while making selections) and apply all of the selected segmentation types.

In other embodiments, the menu might also include a number of different combination options, allowing the user to select one item in the menu that includes more than one segmentation type. For example, audio detection plus speaker recognition may be one combination item on the menu. By selecting this option in the menu, the user causes audio detection and speaker recognition to be performed on the multimedia content. This combination menu items may be preset in the printer 102 properties as a default list of segmentation types and segmentation combination types. In addition, the user can define his or her own combination types. When the user creates a user-defmed segmentation type, the user can give the segmentation type a name, and this option will appear in the drop-down menu of segmentation types. The segmentation type in Figure 19 is entitled "Combo1," and it is a user-defined combination of single segmentation types. Additionally, the threshold field 1204 is disabled because a combination of more than one segmentation technique could produce a huge number of parameters that could be tuned. Thus, each combination of techniques can have a default set of parameter values that are proven to function well. However, the user can modify them in the dialog box (not shown) that appears when the Options button 1906 is clicked.

As shown in Figure 19, the Content Selection field 714 includes two Segmentation Display fields 1102, one for each segmentation type that was applied to the video content. In this example, there is one Segmentation Display field 1102 for each of the two segmentation types that make up "Combo 1." The Segmentation Display field 1102 to the left shows the results of applying the face detection that was shown in Figure 17. However, the event segments 1704 are not staggered as they were in Figure 17, and are instead lined up one over the other. The Segmentation Display field 1102 to the right shows the results of applying video OCR to the video content. The event segments 1704 shown in this Segmentation Display field 1102 appear different from those shown in the Segmentation Display field 1102 to the left. However, in some embodiments, the event segments 1704 shown in different Segmentation Display fields 1102 could appear the same. In some embodiments, the event segments 1704 are arranged in a different format in the two Segmentation Display fields 1102, or the PDDI 1704 can contain only one Segmentation Display field 1102 that shows event segments 1704 for all segmentation types applied.

Besides the example of Figure 19 in which a combination of segmentation types is applied (e.g., Combo1), there are numerous other combinations of segmentation types that can be made. Each of these combinations of segmentation types can be displayed in a menu in the segmentation type field 1202, and the user can select from the menu which segmentation type should be applied. The following is a summary of examples of various different combinations of segmentation types, though numerous other combinations that are not discussed below can also be made. The user can apply motion analysis in combination with distance estimation, in which the PDDI 122 shows the results of applying a motion analysis algorithm and a distance estimation algorithm along one timeline or two separate timelines. The motion analysis timeline could include a waveform whose magnitude indicates the amount of detected motion. The user can set a threshold value allowing the user to select portions of a given video file to print, based on the amount of motion that was detected and the distance of that motion from the camera. Scene segmentation and face detection is another combination that a user could apply, in which the PDDI 122 shows the results of applying a shot segmentation algorithm along a timeline. Color or a special icon, for example, can indicate segments on the timeline that contain face images. Each segment can be accompanied by a confidence value that the scene segmentation is correct and can be accompanied by an integer that expresses the number of faces detected as well as a confidence value. Scene segmentation and OCR is another combination that could be applied, in which the PDDI 122 shows the results of applying a shot segmentation algorithm along a timeline. OCR is also performed on each frame in the video content, and the content is subsampled. The results are displayed along a same or different timeline. The user can also conduct text searches in the OCR results and segments containing the search words can be displayed along the timeline.

When applying combinations of segmentation types to multimedia content, the user is not limited to applying just two types in a combination. The user can apply three or more segmentation types, and such combinations can be shown in the segmentation type menu by default or they can be created by the user. Scene segmentation, OCR, and face recognition can be applied in combination, in which the PDDI 122 shows the results of applying a shot segmentation algorithm along a timeline. Each frame in the video has OCR performed on it and is subsampled, and the results are displayed along the same or different timeline. Names that were derived by application of face recognition to video frames are also shown on the same or different timeline. Also, a series of checkboxes are provided that let the user select clips by choosing names. The user can set threshold values for the results, allowing the user to select portions of a given video file to print based on the confidence values that accompany the shot segmentation, OCR, and face recognition results. Alternatively, the user could apply face detection with OCR and scene segmentation. The PDDI 122 would display the OCR and scene segmentation results as described above. The same or different timeline could also include segments that contain face images. Each segment can be accompanied by an integer that expresses the number of faces detected in the clip as well as a confidence value.

Automobile recognition plus motion analysis could be another alternative segmentation type combination, in which each frame in the video is input to an automobile recognition technique and the results are displayed along a timeline. Also, a motion analysis technique is applied to the video to estimate the automobile's speed from one frame to the next. A text entry dialog box is also provided that allows the user to enter identifiers for the make, model, color, and year for an automobile, and the automobile speed. These items are searched within the automobile recognition and motion analysis results, and clips that contain the entered information are indicated along the timeline.

While Figure 19 shows an example of more than one segmentation types (e.g., Combo 1) being applied to video content, it is possible to apply more than one segmentation type to audio content or any other type of multimedia content. The following is a summary of different combinations of segmentation types that can be applied, although numerous other combinations can be made that are not discussed below. Audio event detection plus classification is one example of a combination. The PDDI 122 shows the results of applying audio event detection, such as clapping, yelling, or laughing, along a timeline. Each detected event is accompanied by a confidence that it was detected correctly. The PDDI 122 includes a series of check boxes that let the user choose which events to display. Speaker segmentation and speaker recognition is another example of a combination. Each segment is shown in a different color or by different icon along a timeline, and segments that were produced by the same speaker are shown in the same color or by the same icon. The speaker recognition results include text and optionally confidence values for each speaker name. Multiple speaker names could be associated with each segment. Sound source localization and audio event detection could alternatively be applied by a user. The direction from which sound was detected is displayed as a sector of a circle. Each sector is accompanied by a confidence that it was detected correctly. The user interface includes a series of check boxes arranged around the circumference of a prototype circle that let the user choose which directions to display. Each detected audio event is accompanied by a confidence that it was detected correctly, and the PDDI 122 includes a series of check boxes that let the user choose which events to display. A user could alternatively apply speech recognition and profile analysis, in combination. A timeline in the PDDI 122 shows text and optionally confidence values for each word or sentence spoken. The speech recognition results are matched against a pre-existing text-based profile that represents the user's interests. The user can adjust a threshold on the confidence values, and the user can also adjust a threshold on the degree of match between the profile and the speech recognition results. Speech recognition and audio event detection is another example of a combination that could be applied. The timeline(s) include text and optionally confidence values for each word or sentence spoken, along with the results of applying audio event detection.

When applying combinations of segmentation types to multimedia content, the user is not limited to applying just two types in a combination. The user can apply three or more segmentation types, and such combinations can be shown in the segmentation type menu by default or they can be created by the user. Speech recognition, audio event detection, and speaker recognition can be applied in combination. The speech recognition results include text and optionally confidence values for each word or sentence. Audio events detected are shown on the same or different timeline. The PDDI 122 also displays the name of each speaker detected, accompanied by a confidence that it was detected correctly. The user interface includes a series of check boxes that let the user choose which speakers to display. Speech recognition, audio event detection, and speaker segmentation could alternatively be applied. The application is the same as above, except speaker segmentation events are shown instead of speaker recognition events. Each speaker segment is shown in a different color or with a different icon, and segments that were produced by the same speaker are shown in the same color or with the same icon. As another example, speech recognition, audio event detection, and sound localization could be applied in combination. The timeline(s) will show text and optionally confidence values for each word or sentence, along with audio events detected. The timeline(s) also display the direction from which sound was detected as a sector of a circle. Each sector is accompanied by a confidence that it was detected correctly. The user interface includes a series of check boxes arranged around the circumference of a prototype circle that let the user choose which directions to display.

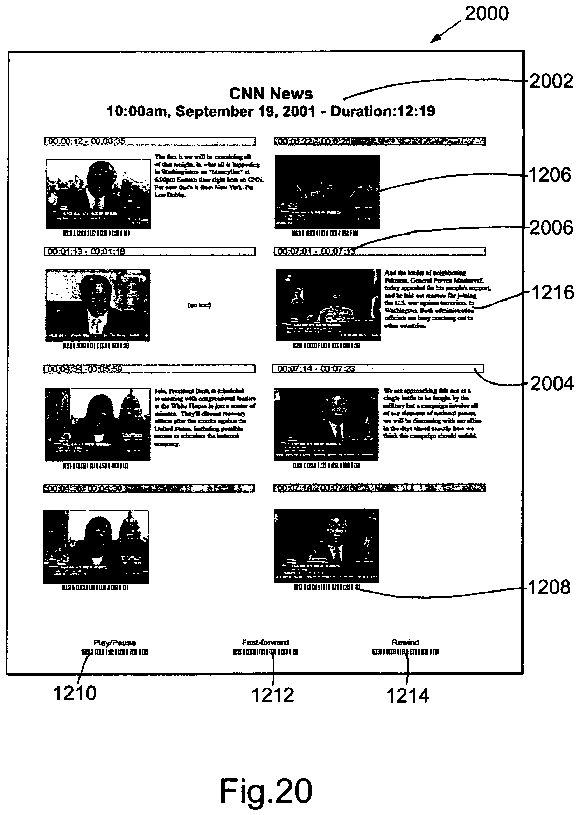

Referring now to Figure 20 there is shown a multimedia representation (e.g., a video paper document) that displays a representation of another embodiment of a multimedia document that can be produced by the system. This document 2000 shows eight video frames 1206, and some of the video frames are accompanied by text 1216, which could be a transcript of the dialog, a summary of the video content, and the like, that could have been produced by the PDDI in Fig. 19. Dividers 2004 separate each video frame 1206 in this embodiment, and time stamps 2006 showing the start time to end time of each segment of video content are included in each divider 2004 . In addition, a header 2002 is shown displaying information about the video content. In this example, the header 2002 shows the title, CNN News, the time of the news show (e.g., 10:00am), the date of the show (e.g., September 19, 2001), and the duration of the show (e.g., twelve minutes and nineteen seconds long).

Identifiers 1208 are shown under each video frame 1206, and the user can select any one of these identifiers 1208 to cause the video content associated with the video frame 1206 to begin to play. The video frame 1206 can begin to play at a point at which the speaker is starting to recite the associated text 1216 transcript. The video frames 1206 for which no text is shown or for which the phrase "no text" is displayed could include video content in which the person in the clip is not speaking, or may represent examples in which the user selected not to show text.

The multimedia document shown in the embodiment of Figure 20 further shows control markers or identifiers for controlling video content display. In Figure 20, there is shown a play marker 1210, a fast forward (FF) marker 1212, and a rewind marker 1214. The markers provide an interface to the multimedia data, as described previously.

While the present invention has been described with reference to certain preferred embodiments, those skilled in the art will recognize that various modifications may be provided. Variations upon and modifications to the preferred embodiments are provided for by the present invention, which is limited only by the following claims.

## Claims

1. A system (100) for permitting interaction with media content analysis and media representation generation to allow output of a media representation in a fixed tangible form, the system comprising:
a user interface (122) for permitting a user to control the media content analysis and media representation generation performed on media content; and
a media analysis software module (104) adapted to analyze features of the media content, the media analysis software module being communicatively coupled to the user interface (122) to receive media content analysis instructions, the media analysis software module (104) further comprising content recognition software for recognizing features in media content;
wherein the media analysis software module is adapted to analyze the features by segmenting the media content using a corresponding user selected segmentation type including audio event detection, speaker segmentation, speaker recognition, sound source localization, speech recognition, profile analysis, video event detection, color histogram analysis, face detection, clustering, face recognition, optical character recognition (OCR), motion analysis, distance estimation, foreground/background segmentation, scene segmentation, automobile recognition, or license plate recognition;
the user interface being adapted to provide a field (718) for setting a threshold value of a confidence level associated with the segmentation performed by the media analysis software module, and the system being adapted to display along a timeline in the media representation a graphical representation of the segments that have a confidence level above the threshold.

2. The system of claim 1, further comprising:
processing logic (106) for controlling display of the user interface (122); or
processing logic (106) for controlling the generation of the media representation; or
hardware for writing the media representation in digital format.

3. The system of claim 2, comprising hardware for writing the media representation in digital format and further comprising a storage medium (144, 202) for storing media representations written in digital format.

4. The system of claim 1, wherein the media representation is generated in paper format; and optionally wherein the paper format includes at least one user-selectable identifier (134) allowing a user to access and control media content.

5. The system of claim 4, wherein the paper format includes at least one user-selectable identifier (134) allowing a user to access and control media content; and
wherein the at least one user-selectable identifier (134) comprises at least one barcode printed on the media representation; or
wherein the at least one user-selectable identifier (134) further comprises at least one play identifier that can be selected to play an associated media content.

6. The system of claim 1, further comprising a communication monitoring module (210) for monitoring communication between the components of the system, wherein the communication monitoring module forwards requests for information and replies to requests among system components; or
wherein the user interface (122) further comprises a selection menu for allowing a user to select feature analysis to be performed on media content; or
wherein the system is configured to store in the field (718) a percentage value as the threshold.

7. The system of claim 1, wherein the user interface further comprises at least one field for managing and modifying display of media information on a media representation; or
wherein the user interface further comprises a preview field (712) for previewing active media frames within selected media content; or
wherein the user interface further comprises a preview field (712) for previewing the media representation being generated; or
wherein the user interface further comprises at least one content selection field (714) for selecting segments of media content from at least one source to be displayed in a media representation.

8. The system of claim 7, wherein the user interface comprises at least one content selection field (714) for selecting segments of media content from at least one source to be displayed in a media representation; and
wherein the content selection field (714) further comprises a selector (736, 1222) that a user can slide along the content selection field in order to select segments
to be displayed in a media representation; or
wherein the content selection field (714) comprises a graphical illustration of media content from which a user can view media content and select segments of media content.

9. The system of claim 8, wherein the content selection field (714) comprises a graphical illustration of media content from which a user can view media content and select segments of media content; and
wherein the graphical illustration of media content along the timeline comprises an audio waveform timeline (734) displaying audio content; or
wherein the graphical illustration of media content along the timeline comprises a video timeline displaying video frames extracted from video content; or
wherein the graphical illustration of media content along the timeline comprises a video timeline displaying text extracted from video content.

10. The system of claim 1, further comprising an output device driver module for driving the media content analysis and the media representation generation, the output device driver module being communicatively coupled to the user interface (122) to receive user instructions..

11. A method for permitting interaction with media content analysis and media representation generation to allow output of a media representation in a fixed tangible form, the method comprising:
providing a user interface (122) to control the media data analysis and media representation generation performed on media content;
providing a media analysis software module (104) adapted to analyze features of the media content, the media analysis software module being communicatively coupled to the user interface (122) to receive media content analysis instructions, the media analysis software module (104) further comprising content recognition software for recognizing features in media content;
wherein the media analysis software module analyzes the features by segmenting the media content using a corresponding user selected segmentation type including audio event detection, speaker segmentation, speaker recognition, sound source localization, speech recognition, profile analysis, video event detection, color histogram analysis, face detection, clustering, face recognition, optical character recognition (OCR), motion analysis, distance estimation, foreground/background segmentation, scene segmentation, automobile recognition, or license plate recognition the user interface providing a field (718) for setting a threshold value of a confidence level associated with the segmentation performed by the media analysis software module, and the system displaying along a timeline in the media representation a graphical representation of the segments that have a confidence level above the threshold.

12. The method of claim 11, further comprising:
generating the media representation; or
wherein the segmenting of the media content comprises performing speech recognition on the media content; or
wherein the segmenting of the media content comprises performing optical character recognition on the media content.

13. The method of claim 11, wherein the segmenting of the media content comprises performing face recognition on the media data; or
wherein the segmenting of the media content comprises performing speech recognition on the media content; or
wherein the segmenting of the media content comprises performing speaker detection on the media content; or
wherein the segmenting of the media content comprises performing face detection on the media content.

14. . The method of claim 11, wherein the segmenting of the media content comprises performing event detection on the media content;
or the method further comprises adding a print function to a media rendering application for printing a media representation; or
the method comprises interacting with the user interface (122) to display media content formatting options to a user.

15. The method of claim 11, comprising interacting with the user interface (122) to select the segmentation type to be applied to the media content; or
comprising interacting with the user interface (122) to select the threshold value; or
comprising interacting with the user interface (122) to preview the media representation being generated in a preview field (712) that displays the media representation as it is being created.

16. The method of claim 11, comprising interacting with the user interface (122) to select the segments of media content in a field of the user interface by sliding a selector (736) along the timeline displaying the media content; or
comprising interacting with the user interface (122) to select a play option on the user interface to play media content.

17. The method of claim 11, wherein generating a printable multimedia representation further comprises printing a media representation in a paper-based format; and optionally further comprising selecting a user-selectable identifier on the paper-based format to play the associated media content.

## Patentansprüche

1. System (100) zum Ermöglichen von Interaktion mit Medieninhaltsanalyse und Mediendarstellungserzeugung, um die Ausgabe einer Mediendarstellung in einer festen greifbaren Form zu ermöglichen, wobei das System umfasst:
eine Benutzerschnittstelle (122) zum Ermöglichen, dass ein Benutzer die an Medieninhalt durchgeführte Medieninhaltsanalyse und Mediendarstellungserzeugung steuert; und
ein Medienanalyse-Softwaremodul (104), das dafür eingerichtet ist, Merkmale des Medieninhalts zu analysieren, wobei das Medienanalyse-Softwaremodul mit der Benutzerschnittstelle (122) kommunikativ gekoppelt ist, um Anweisungen zur Medieninhaltsanalyse zu empfangen, wobei das Medienanalyse-Softwaremodul (104) ferner Inhaltserkennungssoftware zum Erkennen von Merkmalen in Medieninhalt umfasst;
worin das Medienanalyse-Softwaremodul dafür eingerichtet ist, die Merkmale durch Segmentieren des Medieninhalts unter Verwendung eines entsprechenden, durch einen Benutzer ausgewählten Segmentierungstyps zu analysieren, der Folgendes einschließt: Audioereignisermittlung, Sprechersegmentierung, Sprechererkennung, Tonquellenortung, Spracherkennung, Profilanalyse, Videoereigniserkennung, Farbhistogrammanalyse, Gesichtsermittlung, Häufung, Gesichtserkennung, optische Zeichenerkennung (OCR), Bewegungsanalyse, Entfernungsschätzung, Vordergrund-/Hintergrundsegmentierung, Szenensegmentierung, Kraftfahrzeugerkennung oder Kraftfahrzeugkennzeichenerkennung;
wobei die Benutzerschnittstelle dafür eingerichtet ist, ein Feld (718) zum Einstellen eines Schwellenwerts eines Vertrauensniveaus, das der durch das Medienanalyse-Softwaremodul durchgeführten Segmentierung zugeordnet ist, bereitzustellen, und das System dafür eingerichtet ist, eine grafische Darstellung der Segmente, die ein Vertrauensniveau oberhalb des Schwellenwerts haben, entlang einer Zeitleiste in der Mediendarstellung anzuzeigen.

2. System nach Anspruch 1, ferner umfassend:
Verarbeitungslogik (106) zum Steuern der Anzeige der Benutzerschnittstelle (122); oder
Verarbeitungslogik (106) zum Steuern der Erzeugung der Mediendarstellung; oder
Hardware zum Schreiben der Mediendarstellung in digitalem Format.

3. System nach Anspruch 2, Hardware zum Schreiben der Mediendarstellung in digitalem Format umfassend und ferner ein Speichermedium (144, 202) zum Speichern von in digitalem Format geschriebenen Mediendarstellungen umfassend.

4. System nach Anspruch 1, worin die Mediendarstellung in Papierformat erzeugt wird; und worin optional das Papierformat mindestens eine durch einen Benutzer auswählbare Kennung (134) aufweist, die einem Benutzer ermöglicht, auf Medieninhalt zuzugreifen und ihn zu steuern.

5. System nach Anspruch 4, worin das Papierformat mindestens eine durch einen Benutzer auswählbare Kennung (134) aufweist, die einem Benutzer ermöglicht, auf Medieninhalt zuzugreifen und ihn zu steuern; und
worin die mindestens eine durch einen Benutzer auswählbare Kennung (134) mindestens einen auf die Mediendarstellung gedruckten Strichcode umfasst; oder
worin die mindestens eine durch einen Benutzer auswählbare Kennung (134) mindestens eine Abspielkennung umfasst, die ausgewählt werden kann, um einen zugeordneten Medieninhalt abzuspielen.

6. System nach Anspruch 1, ferner ein Kommunikationsüberwachungsmodul (210) zum Überwachen der Kommunikation zwischen den Komponenten des Systems umfassend, worin das Kommunikationsüberwachungsmodul zwischen den Systemkomponenten Anfragen nach Information und Antworten auf Anfragen weiterleitet; oder
worin die Benutzerschnittstelle (122) ferner ein Auswahlmenü umfasst zum Ermöglichen, dass ein Benutzer auswählt, dass an Medieninhalt eine Merkmalsanalyse durchgeführt wird; oder
worin das System dafür konfiguriert ist, einen Prozentwert als den Schwellenwert im Feld (718) zu speichern.

7. System nach Anspruch 1, worin die Benutzerschnittstelle ferner mindestens ein Feld zum Verwalten und Modifizieren der Anzeige von Medieninformation auf einer Mediendarstellung umfasst; oder
worin die Benutzerschnittstelle ferner ein Vorschaufeld (712) zum Sichten von aktiven Medienrahmen innerhalb ausgewählten Medieninhalts umfasst; oder
worin die Benutzerschnittstelle ferner ein Vorschaufeld (712) zum Sichten der Mediendarstellung, die erzeugt wird, umfasst; oder
worin die Benutzerschnittstelle ferner mindestens ein Inhaltsauswahlfeld (714) zum Auswählen von in einer Mediendarstellung anzuzeigenden Segmenten von Medieninhalt aus mindestens einer Quelle umfasst.

8. System nach Anspruch 7, worin die Benutzerschnittstelle mindestens ein Inhaltsauswahlfeld (714) zum Auswählen von in einer Mediendarstellung anzuzeigenden Segmenten von Medieninhalt aus mindestens einer Quelle umfasst; und
worin das Inhaltsauswahlfeld (714) ferner einen Selektor (736, 1222) umfasst, den ein Benutzer über das Inhaltsauswahlfeld schieben kann, um Segmente auszuwählen, die in einer Mediendarstellung anzuzeigen sind; oder
worin das Inhaltsauswahlfeld (714) eine grafische Darstellung von Medieninhalt umfasst, anhand derer ein Benutzer Medieninhalt betrachten und Segmente von Medieninhalt auswählen kann.

9. System nach Anspruch 8, worin das Inhaltsauswahlfeld (714) eine grafische Darstellung von Medieninhalt umfasst, aus der ein Benutzer Medieninhalt betrachten und Segmente von Medieninhalt auswählen kann; und
worin die grafische Darstellung von Medieninhalt entlang der Zeitleiste eine Audiowellenform-Zeitleiste (734) umfasst, die Audioinhalt anzeigt; oder
worin die grafische Darstellung von Medieninhalt entlang der Zeitleiste eine Video-Zeitleiste umfasst, die aus Videoinhalt extrahierte Videorahmen anzeigt; oder
worin die grafische Darstellung von Medieninhalt entlang der Zeitleiste eine Video-Zeitleiste umfasst, die aus Videoinhalt extrahierten Text anzeigt.

10. System nach Anspruch 1, ferner ein Ausgabegerätetreibermodul zum Ansteuern der Medieninhaltsanalyse und der Mediendarstellungserzeugung umfassend, wobei das Ausgabegerätetreibermodul mit der Benutzerschnittstelle (122) kommunikativ gekoppelt ist, um Benutzeranweisungen zu empfangen.

11. Verfahren zum Ermöglichen von Interaktion mit Medieninhaltsanalyse und Mediendarstellungserzeugung, um die Ausgabe einer Mediendarstellung in einer festen greifbaren Form zu ermöglichen, wobei das Verfahren umfasst:
Bereitstellen einer Benutzerschnittstelle (122), um die an einem Medieninhalt durchgeführte Mediendatenanalyse und Mediendarstellungserzeugung zu steuern;
Bereitstellen eines Medienanalyse-Softwaremoduls (104), das dafür eingerichtet ist, Merkmale des Medieninhalts zu analysieren, wobei das Medienanalyse-Softwaremodul mit der Benutzerschnittstelle (122) kommunikativ gekoppelt ist, um Anweisungen zur Medieninhaltsanalyse zu empfangen, wobei das Medienanalyse-Softwaremodul (104) ferner Inhaltserkennungssoftware zum Erkennen von Merkmalen in Medieninhalt umfasst;
worin das Medienanalyse-Softwaremodul die Merkmale durch Segmentieren des Medieninhalts unter Verwendung eines entsprechenden durch einen Benutzer ausgewählten Segmentierungstyps analysiert, der Folgendes einschließt: Audioereignisermittlung, Sprechersegmentierung, Sprechererkennung, Tonquellenortung, Spracherkennung, Profilanalyse, Videoereigniserkennung, Farbhistogrammanalyse, Gesichtsermittlung, Häufung, Gesichtserkennung, optische Zeichenerkennung (OCR), Bewegungsanalyse, Entfernungsschätzung, Vordergrund-/Hintergrundsegmentierung, Szenensegmentierung, Kraftfahrzeugerkennung oder Kraftfahrzeugkennzeichenerkennung;
wobei die Benutzerschnittstelle ein Feld (718) zum Einstellen eines Schwellenwerts eines Vertrauensniveaus, das der durch das Medienanalyse-Softwaremodul durchgeführten Segmentierung zugeordnet ist, bereitstellt und das System eine grafische Darstellung der Segmente, die ein Vertrauensniveau oberhalb des Schwellenwerts haben, entlang einer Zeitleiste in der Mediendarstellung anzeigt.

12. Verfahren nach Anspruch 11, ferner umfassend:
Erzeugen der Mediendarstellung; oder
worin das Segmentieren des Medieninhalts umfasst: Durchführen von Spracherkennung am Medieninhalt; oder
worin das Segmentieren des Medieninhalts umfasst: Durchführen von optischer Zeichenerkennung am Medieninhalt.

13. Verfahren nach Anspruch 11, worin das Segmentieren des Medieninhalts umfasst: Durchführen von Gesichtserkennung an den Mediendaten; oder
worin das Segmentieren des Medieninhalts umfasst: Durchführen von Spracherkennung am Medieninhalt; oder
worin das Segmentieren des Medieninhalts umfasst: Durchführen von Sprechererkennung am Medieninhalt; oder
worin das Segmentieren des Medieninhalts umfasst: Durchführen von Gesichtsermittlung am Medieninhalt.

14. Verfahren nach Anspruch 11, worin das Segmentieren des Medieninhalts umfasst: Durchführen von Ereignisermittlung am Medieninhalt;
oder das Verfahren ferner umfasst: Hinzufügen einer Druckfunktion zu einer Medienwiedergabeanwendung zum Drucken einer Mediendarstellung; oder
das Verfahren umfasst: Interagieren mit der Benutzerschnittstelle (122), um einem Benutzer Medieninhalt-Formatierungsoptionen anzuzeigen.

15. Verfahren nach Anspruch 11, Interagieren mit der Benutzerschnittstelle (122) umfassend, um den auf den Medieninhalt anzuwendenden Segmentierungstyp auszuwählen; oder
Interagieren mit der Benutzerschnittstelle (122) umfassend, um den Schwellenwert auszuwählen; oder
Interagieren mit der Benutzerschnittstelle (122) umfassend, um die Mediendarstellung, die erzeugt wird, in einem Vorschaufeld (712) zu sichten, das die Mediendarstellung anzeigt, während sie erzeugt wird.

16. Verfahren nach Anspruch 11, Interagieren mit der Benutzerschnittstelle (122) umfassend, um die Segmente des Medieninhalts in einem Feld der Benutzerschnittstelle auszuwählen, indem ein Selektor (736) entlang der den Medieninhalt anzeigenden Zeitleiste geschoben wird; oder
Interagieren mit der Benutzerschnittstelle (122) umfassend, um eine Abspieloption auf der Benutzerschnittstelle auszuwählen, um Medieninhalt abzuspielen.

17. Verfahren nach Anspruch 11, worin das Erzeugen einer druckbaren Multimediadarstellung ferner umfasst: Drucken einer Mediendarstellung in einem papierbasierten Format; und und optional ferner umfassend: Auswählen einer durch einen Benutzer auswählbaren Kennung auf dem papierbasierten Format, um den zugeordneten Medieninhalt abzuspielen.

## Revendications

1. Système (100) destiné à permettre une interaction avec une analyse de contenu multimédia et une génération de représentation multimédia en vue de permettre une sortie d'une représentation multimédia sous une forme tangible fixe, le système comprenant :
une interface utilisateur (122) destinée à permettre à un utilisateur de commander l'analyse de contenu multimédia et la génération de représentation multimédia mises en oeuvre sur le contenu multimédia ; et
un module logiciel d'analyse multimédia (104) apte à analyser des caractéristiques du contenu multimédia, le module logiciel d'analyse multimédia étant couplé en communication à l'interface utilisateur (122) en vue de recevoir des instructions d'analyse de contenu multimédia, le module logiciel d'analyse multimédia (104) comprenant en outre un logiciel de reconnaissance de contenu destiné à reconnaître des caractéristiques dans le contenu multimédia ;
dans lequel le module logiciel d'analyse multimédia est apte à analyser les caractéristiques en segmentant le contenu multimédia en utilisant un type de segmentation sélectionné par l'utilisateur correspondant incluant une détection d'événements audio, une segmentation de locuteur, une reconnaissance de locuteur, une localisation de source sonore, une reconnaissance de la parole, une analyse de profil, une détection d'événements vidéo, une analyse d'histogramme de couleurs, une détection faciale, un regroupement, une reconnaissance faciale, une reconnaissance optique de caractères (OCR), une analyse de mouvement, une estimation de distance, une segmentation avant-plan/arrière-plan, une segmentation de scène, une reconnaissance automobile, ou une reconnaissance de plaques d'immatriculation ;
l'interface utilisateur étant apte à fournir un champ (718) pour définir une valeur de seuil d'un niveau de confiance associé à la segmentation mise en oeuvre par le module logiciel d'analyse multimédia, et le système étant apte à afficher, le long d'une frise chronologique dans la représentation multimédia, une représentation graphique des segments qui présentent un niveau de confiance supérieur au seuil.

2. Système selon la revendication 1, comprenant en outre :
une logique de traitement (106) destinée à commander l'affichage de l'interface utilisateur (122) ; ou
une logique de traitement (106) destinée à commander la génération de la représentation multimédia ; ou
du matériel destiné à écrire la représentation multimédia en format numérique.

3. Système selon la revendication 2, comprenant du matériel destiné à écrire la représentation multimédia en format numérique et comprenant en outre un support de stockage (144, 202) destiné à stocker des représentations multimédias écrites en format numérique.

4. Système selon la revendication 1, dans lequel la représentation multimédia est générée en format papier ; et facultativement dans lequel le format papier inclut au moins un identificateur sélectionnable par l'utilisateur (134) permettant à un utilisateur d'accéder au contenu multimédia, et de commander le contenu multimédia.

5. Système selon la revendication 4, dans lequel le format papier inclut au moins un identificateur sélectionnable par l'utilisateur (134) permettant à un utilisateur d'accéder au contenu multimédia et de commander le contenu multimédia ; et
dans lequel ledit au moins un identificateur sélectionnable par l'utilisateur (134) comprend au moins un code à barres imprimé sur la représentation multimédia ; ou
dans lequel ledit au moins un identificateur sélectionnable par l'utilisateur (134) comprend en outre au moins un identificateur de lecture qui peut être sélectionné pour lire un contenu multimédia associé.

6. Système selon la revendication 1, comprenant en outre un module de surveillance de communication (210) destiné à surveiller la communication entre les composants du système, dans lequel le module de surveillance de communication transmet des demandes d'informations et les réponses aux demandes entre les composants du système ; ou
dans lequel l'interface utilisateur (122) comprend en outre un menu de sélection pour permettre à un utilisateur de sélectionner une analyse de caractéristiques à mettre en oeuvre sur le contenu multimédia ; ou
dans lequel le système est configuré de manière à stocker, dans le champ (718), une valeur en pourcentage en tant que le seuil.

7. Système selon la revendication 1, dans lequel l'interface utilisateur comprend en outre au moins un champ pour gérer et modifier l'affichage d'informations multimédias sur une représentation multimédia ; ou
dans lequel l'interface utilisateur comprend en outre un champ de prévisualisation (712) pour prévisualiser des trames multimédias actives au sein d'un contenu multimédia sélectionné ; ou
dans lequel l'interface utilisateur comprend en outre un champ de prévisualisation (712) pour prévisualiser la représentation multimédia générée ; ou
dans lequel l'interface utilisateur comprend en outre au moins un champ de sélection de contenu (714) pour sélectionner des segments de contenu multimédia, à partir d'au moins une source, à afficher dans une représentation multimédia.

8. Système selon la revendication 7, dans lequel l'interface utilisateur comprend au moins un champ de sélection de contenu (714) pour sélectionner des segments de contenu multimédia, à partir d'au moins une source, à afficher dans une représentation multimédia; et
dans lequel le champ de sélection de contenu (714) comprend en outre un sélecteur (736, 1222) qu'un utilisateur peut faire glisser le long du champ de sélection de contenu afin de sélectionner des segments à afficher dans une représentation multimédia ; ou
dans lequel le champ de sélection de contenu (714) comprend une illustration graphique de contenu multimédia à partir de laquelle un utilisateur peut visualiser du contenu multimédia et sélectionner des segments de contenu multimédia.

9. Système selon la revendication 8, dans lequel le champ de sélection de contenu (714) comprend une illustration graphique de contenu multimédia à partir de laquelle un utilisateur peut visualiser du contenu multimédia et sélectionner des segments de contenu multimédia ; et
dans lequel l'illustration graphique de contenu multimédia le long de la frise chronologique comprend une frise chronologique de forme d'onde audio (734) affichant du contenu audio ; ou
dans lequel l'illustration graphique de contenu multimédia le long de la frise chronologique comprend une frise chronologique vidéo affichant des trames vidéo extraites d'un contenu vidéo ; ou
dans lequel l'illustration graphique de contenu multimédia le long de la frise chronologique comprend une frise chronologique vidéo affichant du texte extrait d'un contenu vidéo.

10. Système selon la revendication 1, comprenant en outre un module pilote de dispositif de sortie destiné à commander l'analyse de contenu multimédia et la génération de représentation multimédia, le module pilote de dispositif de sortie étant couplé en communication à l'interface utilisateur (122) en vue de recevoir des instructions d'utilisateur.

11. Procédé destiné à permettre une interaction avec une analyse de contenu multimédia et une génération de représentation multimédia en vue de permettre une sortie d'une représentation multimédia sous une forme tangible fixe, le procédé comprenant les étapes ci-dessous consistant à :
fournir une interface utilisateur (122) pour commander l'analyse de contenu multimédia et la génération de représentation multimédia mises en oeuvre sur le contenu multimédia ;
fournir un module logiciel d'analyse multimédia (104) apte à analyser des caractéristiques du contenu multimédia, le module logiciel d'analyse multimédia étant couplé en communication à l'interface utilisateur (122) en vue de recevoir des instructions d'analyse de contenu multimédia, le module logiciel d'analyse multimédia (104) comprenant en outre un logiciel de reconnaissance de contenu destiné à reconnaître des caractéristiques dans le contenu multimédia ;
dans lequel le module logiciel d'analyse multimédia analyse les caractéristiques en segmentant le contenu multimédia en utilisant un type de segmentation sélectionné par l'utilisateur correspondant incluant une détection d'événements audio, une segmentation de locuteur, une reconnaissance de locuteur, une localisation de source sonore, une reconnaissance de la parole, une analyse de profil, une détection d'événements vidéo, une analyse d'histogramme de couleurs, une détection faciale, un regroupement, une reconnaissance faciale, une reconnaissance optique de caractères (OCR), une analyse de mouvement, une estimation de distance, une segmentation avant-plan/arrière-plan, une segmentation de scène, une reconnaissance automobile, ou une reconnaissance de plaques d'immatriculation ;
l'interface utilisateur fournissant un champ (718) pour définir une valeur de seuil d'un niveau de confiance associé à la segmentation mise en oeuvre par le module logiciel d'analyse multimédia, et le système affichant, le long d'une frise chronologique dans la représentation multimédia, une représentation graphique des segments qui présentent un niveau de confiance supérieur au seuil.

12. Procédé selon la revendication 11, comprenant en outre l'étape ci-dessous consistant à :
générer la représentation multimédia ; ou
dans lequel l'étape de segmentation du contenu multimédia comprend l'étape consistant à mettre en oeuvre une reconnaissance de la parole sur le contenu multimédia ; ou
dans lequel l'étape de segmentation du contenu multimédia comprend l'étape consistant à mettre en oeuvre une reconnaissance optique de caractères sur le contenu multimédia.

13. Procédé selon la revendication 11, dans lequel l'étape de segmentation du contenu multimédia comprend l'étape consistant à mettre en oeuvre une reconnaissance faciale sur les données multimédias ; ou
dans lequel l'étape de segmentation du contenu multimédia comprend l'étape consistant à mettre en oeuvre une reconnaissance de la parole sur le contenu multimédia ; ou
dans lequel l'étape de segmentation du contenu multimédia comprend l'étape consistant à mettre en oeuvre une détection de locuteur sur le contenu multimédia ; ou
dans lequel l'étape de segmentation du contenu multimédia comprend l'étape consistant à mettre en oeuvre une détection faciale sur le contenu multimédia.

14. Procédé selon la revendication 11, dans lequel l'étape de segmentation du contenu multimédia comprend l'étape consistant à mettre en oeuvre une détection d'événements sur le contenu multimédia ;
ou dans lequel le procédé comprend en outre l'étape consistant à ajouter une fonction d'impression à une application de rendu multimédia pour imprimer une représentation multimédia ; ou
dans lequel le procédé comprend l'étape consistant à interagir avec l'interface utilisateur (122) en vue présenter des options de formatage de contenu multimédia à un utilisateur.

15. Procédé selon la revendication 11, comprenant l'étape consistant à interagir avec l'interface utilisateur (122) en vue de sélectionner le type de segmentation à appliquer au contenu multimédia ; ou
comprenant l'étape consistant à interagir avec l'interface utilisateur (122) en vue de sélectionner la valeur de seuil ; ou
comprenant l'étape consistant à interagir avec l'interface utilisateur (122) en vue de prévisualiser la représentation multimédia générée dans un champ de prévisualisation (712) qui affiche la représentation multimédia telle qu'elle est créée.

16. Procédé selon la revendication 11, comprenant l'étape consistant à interagir avec l'interface utilisateur (122) en vue de sélectionner les segments de contenu multimédia dans un champ de l'interface utilisateur en faisant glisser un sélecteur (736) le long de la frise chronologique affichant le contenu multimédia ; ou
comprenant l'étape consistant à interagir avec l'interface utilisateur (122) en vue de sélectionner une option de lecture sur l'interface utilisateur pour lire du contenu multimédia.

17. Procédé selon la revendication 11, dans lequel l'étape de génération d'une représentation multimédia imprimable comprend en outre l'étape consistant à imprimer une représentation multimédia en format papier ; et, facultativement, comprenant en outre l'étape consistant à sélectionner un identificateur sélectionnable par l'utilisateur sur le format papier en vue de lire le contenu multimédia associé.
